(19) Europäisches Patentamt / European Patent Office / Office européen des brevets

(11) EP 4 596 603 A1

(12) **EUROPEAN PATENT APPLICATION**
published in accordance with Art. 153(4) EPC

(43) Date of publication:
**06.08.2025 Bulletin 2025/32**

(21) Application number: **23872583.2**

(22) Date of filing: **29.09.2023**

(51) International Patent Classification (IPC):
***C08G 63/88*** (2006.01) ***C08G 63/16*** (2006.01)
***C08L 101/16*** (2006.01)

(52) Cooperative Patent Classification (CPC):
**C08G 63/16; C08G 63/88; C08L 101/16**

(86) International application number:
**PCT/JP2023/035569**

(87) International publication number:
**WO 2024/071363 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022 JP 2022155836**

(71) Applicant: **Mitsubishi Chemical Corporation**
**Tokyo 100-8251 (JP)**

(72) Inventors:
- **MATSUBARA, Masaki**
  **Tokyo 100-8251 (JP)**
- **OKUMURA, Hiromichi**
  **Tokyo 100-8251 (JP)**
- **YATSUGI, Yutaka**
  **Tokyo 100-8251 (JP)**

(74) Representative: **Hoffmann Eitle**
**Patent- und Rechtsanwälte PartmbB**
**Arabellastraße 30**
**81925 München (DE)**

# (54) METHOD FOR PRODUCING POLYESTER

(57) Provided is a method of producing a polyester by which the amount of cyclic oligomers in the polyester can be reduced to suppress deterioration of the quality. The object is achieved by a method of producing a polyester, the method including: an esterification reaction step of reacting a diol component containing 1,4-butanediol, with a dicarboxylic acid component; a pelletization step of pelletizing a polyester obtained through the esterification reaction step; and a contact treatment step of bringing a polyester pellet obtained in the pelletization step into contact with a contact treatment liquid; wherein in the contact treatment step, the contact treatment liquid upon the contact with the polyester pellet has a cyclic dimer concentration of not more than 3500 ppm by mass.

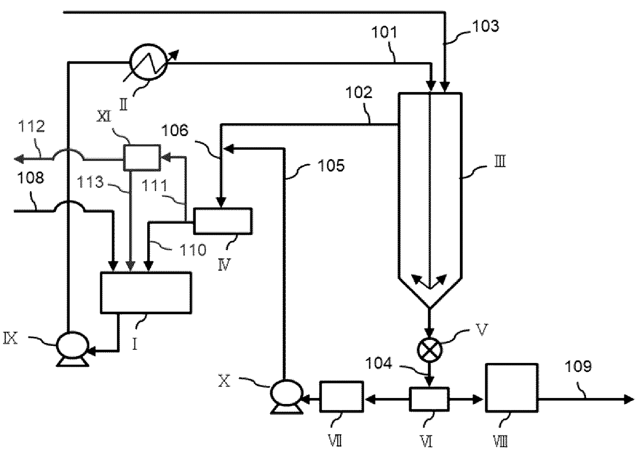


FIG. 3



Processed by Luminess, 75001 PARIS (FR)

## Description

TECHNICAL FIELD

The present invention relates to a method of producing a polyester using a diol component containing 1,4-butanediol, and a dicarboxylic acid component, as main raw materials. More specifically, the present invention relates to a method of producing a polyester whose content of oligomers such as cyclic dimers (which may be hereinafter simply referred to as CD) is low.

BACKGROUND ART

Polyesters containing an aliphatic diol or alicyclic diol, and an aliphatic dicarboxylic acid, alicyclic dicarboxylic acid, or aromatic dicarboxylic acid, as main raw materials; and polyesters containing an aliphatic oxycarboxylic acid as a main raw material; are biodegradable resins having favorable physical properties and degradabilities, and are utilized after being processed into products such as agricultural materials, civil engineering materials, and packaging materials.

However, during polymerization and melt-molding of the polyesters, a reaction inevitably occurs to cause cyclization of part of the polyesters, resulting in production of cyclic oligomers as by-products. Further, this is known to cause, as a result, problems when the polyesters are formed into molded bodies, and examples of such problems include poor surface appearance due to bleeding out of the cyclic oligomers on the molded body surface, and very low productivity due to requirement of cleaning of molds and rollers that have been contaminated during molding.

In a known method to solve the above problems, polymerization of a polyester is followed by acetone treatment of the polyester to reduce the cyclic oligomer content (see Patent Document 1). In other known methods, washing treatment of a polyester is carried out by bringing the polyester into contact with pure water, with pure water and an alcohol, or with a pure alcohol within a particular temperature range, to prevent deterioration of the external appearance of the molded product, or a polyester is brought into contact with a watersoluble organic solvent selected from the group consisting of ketones, ethers, and esters, and with water, to carry out post-treatment (see Patent Documents 2 and 3).

In still other known methods, a polyester is brought into contact with an isopropanol/water mixture or with an ethanol/water mixture having a particular ratio, to enable suppression of deterioration of the external appearance of the surface of the molded product, or suppression of lowering of the productivity due to mold cleaning and the like (see Patent Documents 4 and 5). Patent Documents 4 and 5 disclose, as methods of bringing a polyester into contact with an alcohol/water mixture (contact treatment liquid), a batch treatment method in which a pelletized polyester and a contact treatment liquid are placed in a treatment tank to bring them into contact with each other followed by extracting pellets after the contact treatment, and a continuous treatment method in which, while pellets are continuously supplied into piping or a treatment tank, a contact treatment liquid is brought into contact with the pellets by allowing the contact treatment liquid to flow in the co-current or counter-current direction relative to the flow of the pellets, and the pellets are continuously extracted. Examples of a continuous treatment method that has been disclosed include a method in which pellets are supplied from the top of a tank storing a contact treatment liquid containing pellets, wherein part of the contact treatment liquid is extracted from the side of the tank, and part of the contact treatment liquid containing the pellets is removed from the bottom of the tank.

It has also been disclosed that the contact treatment liquid extracted after the contact treatment can be recovered by distillation for recycling, and that part of the extracted contact treatment liquid can be discarded while fresh contact treatment liquid can be added in the same amount as the amount of the discarded contact treatment liquid.

PRIOR ART DOCUMENTS

PATENT DOCUMENTS

PTL 1: JP 2005-324259 A
PTL 2:JP H7-316276 A
PTL 3: JP 2004-107457 A
PTL 4: JP 2010-195989 A
PTL 5: JP 2012-092310 A

SUMMARY OF THE INVENTION

## PROBLEMS TO BE SOLVED BY THE INVENTION

However, in cases where a polyester is treated with acetone to reduce the cyclic oligomer content, there may be problems such as a bad odor due to the residual acetone in the treated pellets. Therefore, excessively large equipment is required because of, for example, requirement of a separate water treatment process after the acetone treatment, which has been problematic.

Further, in cases where the extracted contact treatment liquid is recycled, the cyclic oligomer content in the pellets after the contact treatment increases due to residual cyclic oligomers in the recycled contact treatment liquid, resulting in a poor external appearance of the polyester surface and a decrease in the productivity during molding.

In order to solve the above problems, the present invention aims to provide a method of producing a polyester, the method being capable of suppressing the amount of cyclic oligomers in the polyester, thereby suppressing the deterioration of the quality.

## MEANS FOR SOLVING THE PROBLEMS

The present inventors studied to discover that the above problems can be solved by controlling the concentration of cyclic dimers in the contact treatment liquid that is to be brought into contact with the polyester pellets, thereby completing the present invention.

Specifically, the present invention relates to [1] to [15] below.

[1] A method of producing a polyester, the method comprising:

an esterification reaction step of reacting a diol component containing 1,4-butanediol, with a dicarboxylic acid component;
a pelletization step of pelletizing a polyester obtained through the esterification reaction step; and
a contact treatment step of bringing a polyester pellet obtained in the pelletization step into contact with a contact treatment liquid,
wherein in the contact treatment step, the contact treatment liquid upon the contact with the polyester pellet has a cyclic dimer concentration of not more than 3500 ppm by mass.

[2] The method of producing a polyester according to [1], wherein the temperature of the contact treatment liquid upon the contact between the polyester pellet and the contact treatment liquid is not less than 25°C and not more than the melting point of the polyester.
[3] The method of producing a polyester according to [1] or [2], further comprising a separation step of separating at least part of cyclic dimers in the contact treatment liquid after the contact treatment step.
[4] The method of producing a polyester according to [3], wherein the contact treatment liquid from which at least part of the cyclic dimers have been separated in the separation step is used as a contact treatment liquid in the contact treatment step.
[5] The method of producing a polyester according to [3] or [4], wherein the cyclic dimers separated in the separation step are supplied to the esterification reaction step.
[6] The method of producing a polyester according to any one of [1] to [5], wherein in the contact treatment step, the contact treatment liquid upon the contact between the polyester pellet and the contact treatment liquid contains water at 10% by mass to 99% by mass with respect to the total contact treatment liquid.
[7] The method of producing a polyester according to any one of [1] to [6], wherein in the contact treatment step, the contact treatment liquid upon the contact between the polyester pellet and the contact treatment liquid is a mixture of an alcohol and water.
[8] The method of producing a polyester according to any one of [1] to [7], wherein in the contact treatment step, the contact treatment liquid upon the contact with the polyester pellet has a cyclic dimer concentration of not less than 100 ppm by mass.
[9] A method of producing a polyester, the method comprising:

an esterification reaction step of reacting a diol component containing 1,4-butanediol, with a dicarboxylic acid component;
a pelletization step of pelletizing a polyester obtained through the esterification reaction step;
a contact treatment step of bringing a polyester pellet obtained in the pelletization step into contact with a contact treatment liquid that is a mixture of an alcohol and water; and
a separation step of separating at least part of cyclic dimers in the contact treatment liquid after the contact treatment step,

wherein the contact treatment liquid from which at least part of the cyclic dimers have been separated in the separation step is used as a contact treatment liquid in the contact treatment step.

[10] The method of producing a polyester according to [9], wherein the cyclic dimers separated in the separation step are supplied to the esterification reaction step.
[11] The method of producing a polyester according to [9] or [10], wherein the resulting polyester has a cyclic dimer content of not more than 2000 ppm by mass.
[12] The method of producing a polyester according to any one of [9] to [11], wherein the separation step is a separation step of separating cyclic dimers using a separator.
[13] A method of producing a polyester, the method comprising:

a contact treatment step of bringing a polyester pellet into contact with a contact treatment liquid that contains a mixture of an alcohol and water;
a separation step of separating at least part of cyclic dimers from the contact treatment liquid obtained in the contact treatment step; and
a polyester production step of bringing the contact treatment liquid obtained by separating the cyclic dimers in the separation step into contact with a polyester pellet, to obtain a polyester,
wherein the polyester obtained in the production step has a cyclic dimer content of not more than 2000 ppm by mass.

[14] Use of a polyester for the production of a food contact film, the polyester containing:

a repeating structural unit derived from a diol containing 1,4-butanediol; and
a repeating structural unit derived from a dicarboxylic acid,

the polyester having a cyclic dimer content of not more than 2000 ppm by mass.
[15] A food contact film comprising a polyester composition that contains a polyester containing:

a repeating structural unit derived from a diol containing 1,4-butanediol; and
a repeating structural unit derived from a dicarboxylic acid,

the polyester having a cyclic dimer content of not more than 2000 ppm by mass.

## EFFECTS OF THE INVENTION

In the production method of the present invention, the amount of cyclic dimers in the contact treatment liquid that is to be brought into contact with the polyester pellet can be controlled to reduce the amount of cyclic oligomers in the polyester, so that a product can be obtained while suppressing deterioration of the quality of the polyester, and without lowering the productivity during molding.

## BRIEF DESCRIPTION OF THE DRAWINGS

Fig. 1 is a schematic diagram illustrating one embodiment of the esterification reaction step employed in the present invention.
Fig. 2 is a schematic diagram illustrating one embodiment of the polycondensation step employed in the present invention.
Fig. 3 is a schematic diagram illustrating one embodiment of the contact treatment step and the separation step employed in the present invention.
Fig. 4 is a schematic diagram illustrating one embodiment of the drying step employed in the present invention.

## MODE FOR CARRYING OUT THE INVENTION

The present invention is not limited to the following description, and may be carried out with an arbitrary modification without departing from the spirit of the present invention. In the present description, each range expressed by numerical or physical property values placed before and after "to" includes the endpoints, that is, the upper and lower limit values, of the range.

In the present description, "% by mass", "ppm by mass", and "parts by mass" have the same meanings as "% by weight", "ppm by weight", and "parts by weight", respectively.

The production method of the present invention is a method of producing a polyester, the method comprising:

an esterification reaction step of reacting a diol component containing at least 1,4-butanediol, with a dicarboxylic acid component;
a pelletization step of pelletizing a polyester obtained through the esterification reaction step; and
a contact treatment step of bringing a polyester pellet obtained in the pelletization step into contact with a contact treatment liquid,
wherein the contact treatment liquid in the contact treatment step has a cyclic dimer concentration of not more than 3500 ppm by mass.

In the present invention, the cyclic dimers and the cyclic oligomers are compounds produced as by-products through an esterification reaction step in which a diol component containing 1,4-butanediol is reacted with a dicarboxylic acid component, wherein the by-products are generated by cyclization of part of the resulting polyester. Each of the cyclic dimers and the cyclic oligomers contains a diol including 1,4-butanediol, and a dicarboxylic acid. By reducing the content of those compounds in the polyester pellet, deterioration of the external appearance of the surface of the polyester and lowering of the productivity during molding can be suppressed.

In the present invention, a cyclic dimer can be represented, for example, by the following General Formula (A).

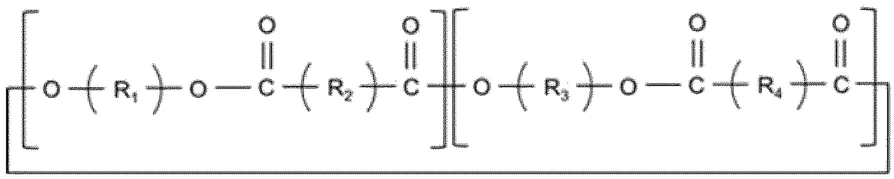
(A)

In Formula (A), $R^1$, $R^2$, $R^3$, and $R^4$ are each independently an aliphatic hydrocarbon group having 1 to 40 carbon atoms or an aromatic hydrocarbon group having 6 to 40 carbon atoms. In cases of an aliphatic hydrocarbon group, it may be a chain aliphatic hydrocarbon group, may be a cyclic aliphatic hydrocarbon group, or may be a group in which a chain aliphatic hydrocarbon group is bound to a cyclic aliphatic hydrocarbon group. In cases of a chain aliphatic hydrocarbon group, it may be a linear aliphatic hydrocarbon group, or may be a branched aliphatic hydrocarbon group. In cases of a cyclic aliphatic hydrocarbon group, it may be a monocyclic group, or may be a group composed of a plurality of rings bound to or condensed with each other.

Examples of the cyclic dimer represented by General Formula (A) include: a cyclic dimer in which $R^1$ and $R^3$ are linear aliphatic hydrocarbon groups having 4 carbon atoms, and in which $R^2$ and $R^4$ are linear aliphatic hydrocarbon groups having 2 carbon atoms; and a cyclic dimer in which $R^1$ and $R^3$ are linear aliphatic hydrocarbon groups having 4 carbon atoms, in which $R^2$ is a linear aliphatic hydrocarbon group having 2 carbon atoms, and in which $R^4$ is a linear aliphatic hydrocarbon group having 4 carbon atoms.

<Diol Component>

As the diol component used in the present invention, any diol component that is normally used as a raw material of polyesters can be used without limitation as long as the component contains at least 1,4-butanediol as described above. As the diol component, an aliphatic diol component may be used, or an aromatic diol component may be used.

More specific examples of the aliphatic diol components other than 1,4-butanediol include: alkylene diols such as ethylene glycol, 1,2-propanediol, 1,3-propanediol, 1,5-pentanediol, 1,6-hexanediol, 1,7-heptanediol, 1,8-octanediol, 1, 9-nonanediol, 1,10-decanediol, and neopentyl glycol; oxyalkylene diols such as diethylene glycol, polyethylene glycol, polypropylene glycol, and polytetramethylene ether glycol; and cycloalkylene diols such as 1,2-cyclohexanediol, 1,4-cyclohexanediol, 1,2-cyclohexanedimethanol, and 1,4-cyclohexanedimethanol. Among these, from the viewpoint of physical properties of the polyester obtained, alkylene diols having not more than 6 carbon atoms, such as ethylene glycol and 1,3-propanediol, or cycloalkylene diols having not more than 6 carbon atoms, such as 1,4-cyclohexanedimethanol, are preferred.

More specific examples of the aromatic diol component include xylylene glycol, 4,4'-dihydroxybiphenyl, 2,2-bis(4'-hydroxyphenyl)propane, 2,2-bis(4'-β-hydroxyethoxyphenyl)propane, bis(4-hydroxyphenyl)sulfone, and bis(4-β-hydroxyethoxyphenyl)sulfonic acid. The aromatic diol component may also be a derivative of an aromatic diol compound. Further, the compound may have a structure composed of a plurality of aliphatic diol compounds and/or aromatic diol compounds that are dehydration-condensed with each other.

Only one of these aliphatic diol components and aromatic diol components may be used, or two or more of these components may be used in combination.

The amount of the 1,4-butanediol used is preferably not less than 50 mol%, more preferably not less than 70 mol%, especially preferably not less than 90 mol% with respect to the total diol component from the viewpoint of the melting point (heat resistance), the biodegradability, and the mechanical properties of the polyester obtained. The ethylene glycol, the 1,3-propanediol, and the 1,4-butanediol used may be those derived from plant materials.

<Dicarboxylic Acid Component>

As the dicarboxylic acid component used in the present invention, any dicarboxylic acid component normally used as a raw material of polyesters can be used without limitation. As the dicarboxylic acid component, an aliphatic dicarboxylic acid component may be used, or an aromatic dicarboxylic acid component may be used.

More specific examples of the aliphatic dicarboxylic acid component include aliphatic dicarboxylic acids such as oxalic acid, malonic acid, succinic acid, succinic anhydride, glutaric acid, adipic acid, pimelic acid, suberic acid, azelaic acid, sebacic acid, undecadicarboxylic acid, dodecadicarboxylic acid, and dimer acid. Among these, from the viewpoint of physical properties of the polyester obtained, aliphatic dicarboxylic acids such as succinic acid, succinic anhydride, adipic acid, and sebacic acid are preferred. Aliphatic dicarboxylic acids having not more than 4 carbon atoms, such as succinic acid and succinic anhydride are especially preferred.

More specific examples of the aromatic dicarboxylic acid component include phthalic acid, isophthalic acid, dibromoisophthalic acid, sulfoisophthalic acid, 1,4-phenylenedioxydicarboxylic acid, 4,4'-diphenyldicarboxylic acid, 4,4'-diphenyletherdicarboxylic acid, 4,4'-diphenylketonedicarboxylic acid, 4,4'-diphenoxyethanedicarboxylic acid, 4,4'-diphenylsulfonedicarboxylic acid, 2,6-naphthalenedicarboxylic acid, hexahydrophthalic acid, hexahydroisophthalic acid, and hexahydroterephthalic acid. The aromatic dicarboxylic acid component may also be a derivative of an aromatic dicarboxylic acid compound. For example, derivatives of the aromatic dicarboxylic acid components exemplified above are preferred, and among these, lower alkyl esters having 1 to 4 carbon atoms and acid anhydrides are especially preferred. Specific examples of the derivatives of the aromatic dicarboxylic acid compound include: lower alkyl esters, such as methyl esters, ethyl esters, propyl esters, and butyl esters, of the aromatic dicarboxylic acid components exemplified above; and cyclic acid anhydrides of the aromatic dicarboxylic acid components exemplified above, such as succinic anhydride.

Only one of these aliphatic dicarboxylic acid components and aromatic dicarboxylic acid components may be used, or two or more of these components may be used in combination.

In cases where succinic acid is used as the dicarboxylic acid component, the amount of the succinic acid used is preferably not less than 50 mol%, more preferably not less than 70 mol%, especially preferably not less than 90 mol% with respect to the total dicarboxylic acid component from the viewpoint of the melting point (heat resistance), the biodegradability, and the mechanical properties of the polyester obtained. The succinic acid, the succinic anhydride, the adipic acid, and the like may be those derived from plant materials.

<Other Copolymerization Components>

In the method of producing a polyester of the present invention, constituting components other than the diol component containing at least 1,4-butanediol, and other than the dicarboxylic acid component, may be copolymerized. Examples of copolymerization components that can be used in such cases include: oxycarboxylic acids such as lactic acid, glycolic acid, hydroxybutyric acid, hydroxycaproic acid, 2-hydroxy-3,3-dimethylbutyric acid, 2-hydroxy-3-methylbutyric acid, 2-hydroxyisocaproic acid, malic acid, maleic acid, citric acid, and fumaric acid, and esters, lactones, and oxycarboxylic acid polymers of these oxycarboxylic acids; polyhydric alcohols that are tri- or higher-functional alcohols such as glycerin, trimethylolpropane, and pentaerythritol; or polycarboxylic acids that are tri- or higher-functional carboxylic acids such as propanetricarboxylic acid, pyromellitic acid, trimellitic acid benzophenone tetracarboxylic acid, and their anhydrides.

Tri- or higher-functional oxycarboxylic acids, tri- or higher-functional alcohols, tri- or higher-functional carboxylic acids, and the like are likely to enable production of highly viscous polyesters when they are added in small amounts. Among these, oxycarboxylic acids such as malic acid, citric acid, and fumaric acid are preferred, and malic acid is especially preferably used.

The polyfunctional compounds that are tri- or higher-functional are preferably at 0.001 to 5 mol%, more preferably at 0.05 to 0.5 mol% with respect to the total dicarboxylic acid component. In cases where the amount exceeds the upper limit of this range, gel (unmelted product) is likely to be formed in the resulting polyester, while in cases where the amount is below the lower limit, the advantage of using the polyfunctional compounds (which can usually increase the viscosity of the resulting polyester) can be hardly obtained.

<Physical Properties of Polyester Pellet>

In the present invention, the lower limit of each of the intrinsic viscosity (IV, dL/g) of the polyester pellet to be subjected to the contact treatment with the contact treatment liquid and the intrinsic viscosity of the polyester pellet after being subjected to the contact treatment with the contact treatment liquid is preferably 1.4 dL/g, especially preferably 1.6 dL/g. The upper limit is preferably 2.8 dL/g, more preferably 2.5, especially preferably 2.3 dL/g. In cases where the intrinsic viscosity is less than the lower limit, the resulting molded product is less likely to have a sufficient mechanical strength. In cases where the intrinsic viscosity exceeds the upper limit, the melt viscosity during molding increases, so that the molding cannot be easily carried out.

In the present invention, the amount of terminal carboxyl groups in the polyester to be subjected to the contact treatment with the contact treatment liquid is usually not more than 80 (equivalents/ton), preferably not more than 60 (equivalents/ton), more preferably not more than 40 (equivalents/ton), especially preferably not more than 25 (equivalents/ton). Regarding the lower limit, the smaller the amount of the terminal carboxyl groups, the higher the thermal stability and the hydrolysis resistance. The amount is usually not less than 5 (equivalents/ton). In cases where the amount exceeds the upper limit, a remarkable decrease in the viscosity occurs due to hydrolysis, which may result in significant deterioration of the quality.

<Method of Producing Polyester Pellet>

The method of producing the polyester pellet to be used in the contact step in the present invention is described below by way of an example using a continuous production method.

In the method of producing the polyester pellet to be used in the contact step in the present invention, when a continuous production method is employed, a diol component containing 1,4-butanediol, and a dicarboxylic acid component, are subjected to an esterification reaction step and a melt polycondensation reaction step using a plurality of continuous reaction tanks, to obtain polyester pellets continuously. However, as long as the effect of the present invention is not prevented, the method is not limited to the continuous method, and a conventionally known method of producing polyester pellets may be employed. The polyester pellets are subjected to the contact treatment with the contact treatment liquid, and then dried.

<Esterification Reaction Step>

In the method of producing the polyester pellet to be used in the contact treatment step in the present invention, the polyester pellet to be used is produced through an esterification reaction step in which a diol component at least containing 1,4-butanediol is reacted with a dicarboxylic acid component. The esterification reaction step and the subsequent other steps can be carried out either in a plurality of continuous reaction tanks or in a single reaction tank. However, those steps are preferably carried out in a plurality of continuous reaction tanks for the purpose of reducing variation of physical properties of the resulting polyester pellets.

The reaction temperature in the esterification reaction step is not limited as long as the esterification reaction step can be carried out at the temperature. From the viewpoint of increasing the reaction rate, the reaction temperature is preferably not less than 200°C, more preferably not less than 210°C. From the viewpoint of preventing, for example, coloring of the polyester, the reaction temperature is preferably not more than 250°C, more preferably not more than 245°C, especially preferably not more than 240°C.

In cases where the reaction temperature is too low, the reaction time increases due to low esterification reaction rate, leading to an increase in undesirable reactions such as dehydration degradation of the diol component. In cases where the reaction temperature is too high, degradation of the diol component and the dicarboxylic acid component increases, and in addition, flying debris increases in the reaction tank, which tends to cause the presence of foreign matter, and to cause turbidity (haze) in the reaction product. The esterification temperature is preferably constant. In cases where the esterification temperature is constant, a stable esterification ratio can be achieved. The constant temperature means the set temperature $\pm 5$°C, preferably $\pm 2$°C.

The reaction atmosphere is preferably an atmosphere of an inert gas such as nitrogen or argon. The reaction pressure is preferably 50 kPa to 200 kPa, more preferably not less than 60 kPa, still more preferably not less than 70 kPa, and is more preferably not more than 130 kPa, still more preferably not more than 110 kPa.

In cases where the reaction pressure is less than the lower limit, flying debris increases in the reaction tank. Therefore, the haze of the reaction product tends to increase, and foreign matter tends to increase. Further, since distillation of the diol component to the outside of the reaction system increases, the polycondensation reaction rate tends to decrease. In cases where the reaction pressure exceeds the upper limit, dehydration degradation of the diol component increases, so that the polycondensation rate tends to decrease.

The reaction time is preferably not less than 1 hour. Regarding the upper limit, the reaction time is preferably not

more than 10 hours, more preferably not more than 4 hours.

The molar ratio of the diol component to the dicarboxylic acid component for carrying out the esterification reaction represents the molar ratio of the diol component and the esterified diol component to the dicarboxylic acid component and the esterified dicarboxylic acid component present in the gas phase and the reaction liquid phase in the esterification reaction tank, wherein dicarboxylic acid components and diol components that have been degraded in the reaction system and that do not contribute to the esterification reaction, and their degradation products, are not taken into account. The term "have been degraded and do not contribute to the esterification reaction" means that the molar ratio does not include, for example, tetrahydrofuran produced as a result of degradation of 1,4-butanediol, which is a diol component.

In the present invention, the molar ratio is usually not less than 1.10, preferably not less than 1.12, more preferably not less than 1.15, especially preferably not less than 1.20 regarding the lower limit. The molar ratio is usually not more than 2.00, preferably not more than 1.80, more preferably not more than 1.60, especially preferably not more than 1.55 regarding the upper limit.

In cases where the molar ratio is less than the lower limit, the esterification reaction tends to be insufficient, and the polycondensation reaction as the post-step reaction hardly proceeds, so that a polyester with a high degree of polymerization can hardly be obtained. In case where the molar ratio exceeds the upper limit, the amounts of the diol component and the dicarboxylic acid component that are degraded tend to increase. In a method preferred for maintaining the molar ratio within the preferred range, the diol component is supplied to the esterification reaction system as appropriate.

In the present invention, an esterification reaction product with an esterification ratio of not less than 80% is preferably subjected to the polycondensation reaction. In the present invention, the polycondensation reaction means a reaction to increase the molecular weight of a polyester, which reaction is carried out at a reaction pressure of not more than 50 kPa. The esterification reaction is carried out at 50 to 200 kPa usually in an esterification reaction tank, and the polycondensation reaction is carried out at not more than 50 kPa, preferably at not more than 10 kPa, in a polycondensation reaction tank. In the present invention, the esterification ratio is the ratio of the esterified acid component to the total acid component in the esterification reaction product sample, and the ratio is expressed by the following equation.

Esterification ratio (%) = (saponification value - acid value) / saponification value $\times$ 100

The esterification ratio of the esterification reaction product is preferably not less than 85%, more preferably not less than 88%, especially preferably not less than 90%. In cases where the esterification ratio is not more than the lower limit, the reactivity in the polycondensation reaction as the post-step reaction decreases. Further, the amount of flying debris during the polycondensation reaction increases, and the flying debris adheres to and solidifies on the wall surface, followed by dropping of the flying debris into the reaction product, resulting in a higher haze (presence of foreign matter). Regarding the upper limit, the esterification ratio is preferably as high as possible from the viewpoint of the polycondensation reaction that is the post-step reaction. The esterification ratio is, however, usually 99%.

In the present invention, a high-quality polyester with low haze and low foreign matter content can be efficiently obtained by carrying out continuous reaction with a molar ratio between the dicarboxylic acid component and the diol component, a reaction temperature, a reaction pressure, and a reaction rate within the above-described ranges in the esterification reaction, and continuously subjecting the reaction product to the polycondensation reaction.

<Polycondensation Reaction Step>

In the production of the polyester to be used in the contact treatment step in the present invention, the esterification reaction step is preferably followed by polycondensation reaction in a polycondensation reaction step. The polycondensation reaction can be carried out under reduced pressure using a plurality of continuous reaction tanks.

The reaction pressure in the final polycondensation reaction tank is usually not less than 0.01 kPa, preferably not less than 0.03 kPa regarding the lower limit, and is usually not more than 1.4 kPa, preferably not more than 0.4 kPa regarding the upper limit. In cases where the pressure during the polycondensation reaction is too high, the polycondensation time is long, and as a result, thermal degradation of the polyester occurs, leading to a decrease in the molecular weight and coloring, so that production of a polyester showing practically sufficient properties tends to become difficult.

On the other hand, although a production method using ultra-high vacuum polycondensation equipment that employs a reaction pressure of less than 0.01 kPa is a preferred mode from the viewpoint of increasing the polycondensation reaction rate, the method is economically disadvantageous because of requirement of very expensive equipment.

Regarding the range of the reaction temperature, the lower limit is usually 215°C, preferably 220°C, and the upper limit is usually 270°C, preferably 260°C. In cases where the reaction temperature is less than the lower limit, the polycondensation reaction rate is low, and hence production of a polyester with a high degree of polymerization takes a

long time. Moreover, a high-power stirrer is required. Thus, such a reaction temperature is economically disadvantageous. On the other hand, in cases where the reaction temperature exceeds the upper limit, thermal degradation of the polyester easily occurs during the production, so that production of a polyester with a high degree of polymerization tends to be difficult.

Regarding the reaction time, the lower limit is usually 1 hour, and the upper limit is usually 15 hours, preferably 10 hours, more preferably 8 hours. In cases where the reaction time is too short, the reaction is insufficient, so that a polyester with a high degree of polymerization can be hardly obtained, and hence the molded product tends to have poor mechanical properties. On the other hand, in cases where the reaction time is too long, thermal degradation of the polyester leads to a remarkable decrease in the molecular weight, and this tends to result in poor mechanical properties of the molded product. Moreover, the amount of carboxyl termini may increase to adversely affect the durability of the polyester.

By controlling the polycondensation reaction temperature and time, and the reaction pressure, a polyester having a desired intrinsic viscosity can be obtained.

<Reaction Catalyst>

The esterification reaction and the polycondensation reaction can be promoted by using reaction catalysts. In the esterification reaction, sufficient reaction rate can be obtained even without an esterification reaction catalyst. In cases where an esterification reaction catalyst is present during the esterification reaction, water produced by the esterification reaction may cause the catalyst to generate insoluble precipitates in the reaction product, which may decrease the transparency (in other words, increase the haze) of the resulting polyester and may become foreign matter. Therefore, preferably, no reaction catalyst is added or used during the esterification reaction. Further, since addition of a catalyst to the gas-phase portion in the reaction tank may increase the haze, and may cause the catalyst to become a foreign matter, the catalyst is preferably added into the reaction liquid.

In the polycondensation reaction, a catalyst is preferably used since the reaction hardly proceeds without a catalyst. As the polycondensation reaction catalyst, a compound containing at least one metallic element in groups 1 to 14 of the periodic table is commonly used. Specific examples of the metallic element include scandium, yttrium, samarium, titanium, zirconium, vanadium, chromium, molybdenum, tungsten, tin, antimony, cerium, germanium, zinc, cobalt, manganese, iron, aluminum, magnesium, calcium, strontium, sodium, and potassium. Among these, scandium, yttrium, titanium, zirconium, vanadium, molybdenum, tungsten, zinc, iron, and germanium are preferred. Titanium, zirconium, tungsten, iron, and germanium are especially preferred.

Furthermore, in order to reduce the polyester terminus concentration, which affects the thermal stability of the polyester, metallic elements in groups 3 to 6 of the periodic table that exhibit Lewis acidity are preferred among the above metals. Specifically, these are scandium, titanium, zirconium, vanadium, molybdenum, and tungsten. From the viewpoint of the availability, titanium and zirconium are preferred. From the viewpoint of the reaction activity, titanium is preferred.

The present invention preferably uses, as the catalyst, organic group-containing compounds such as carboxylates, alkoxy salts, organic sulfonates, or β-diketonates that contain these metallic elements; inorganic compounds such as oxides and halides of the above metals; and mixtures thereof.

Since the polymerization rate increases when the catalyst is in a molten or dissolved state during the polymerization, the catalyst in the present invention is preferably a compound that is in the form of a liquid during the polymerization, or that dissolves in a low ester polymer or in a polyester. Although the polycondensation is preferably carried out without a solvent, a small amount of solvent may be additionally used for dissolving the catalyst. Examples of such a solvent used for dissolving the catalyst include alcohols such as methanol, ethanol, isopropanol, and butanol; the above-described diols such as ethylene glycol, butanediol, and pentanediol; ethers such as diethyl ether and tetrahydrofuran; nitriles such as acetonitrile; hydrocarbon compounds such as heptane and toluene; water; and mixtures thereof. The solvent is used in an amount that results in a catalyst concentration of usually 0.0001 % by mass to 99% by mass.

Preferred examples of the titanium compound include tetraalkyl titanates and their hydrolysates. Specific examples of the titanium compound include tetra-n-propyl titanate, tetraisopropyl titanate, tetra-n-butyl titanate, tetra-t-butyl titanate, tetraphenyl titanate, tetracyclohexyl titanate, tetrabenzyl titanate, mixed titanates thereof, and hydrolysates thereof.

Other preferred examples of the titanium compound include titanium (oxy)acetylacetonate, titanium tetraacetylacetonate, titanium (diisoproxide) acetylacetonate, titanium bis(ammonium lactate) dihydroxide, titanium bis(ethylacetoacetate) diisopropoxide, titanium (triethanolaminate) isopropoxide, polyhydroxytitanium stearate, titanium lactate, titanium triethanolaminate, and butyl titanate dimer. Examples of the titanium compound also include liquid products obtained by mixing an alcohol, a compound containing a group 2 metal in the long-form periodic table (Nomenclature of Inorganic Chemistry IUPAC Recommendations 2005) (which may be hereinafter referred to as a compound containing a group 2 metal in the long-form periodic table), a phosphate ester compound, and a titanium compound.

Among these, tetra-n-propyl titanate, tetraisopropyl titanate, and tetra-n-butyl titanate; titanium (oxy)acetylacetonate, titanium tetraacetylacetonate, titanium bis(ammonium lactate) dihydroxide, polyhydroxytitanium stearate,

titanium lactate, and butyl titanate dimer; and liquid products obtained by mixing an alcohol, a compound containing a group 2 metal in the long-form periodic table, a phosphate ester compound, and a titanium compound; are preferred. Tetra-n-butyl titanate, titanium (oxy)acetylacetonate, titanium tetraacetylacetonate, polyhydroxytitanium stearate, titanium lactate, and butyl titanate dimer; and liquid products obtained by mixing an alcohol, a compound containing a group 2 metal in the long-form periodic table, a phosphate ester compound, and a titanium compound; are more preferred. Tetra-n-butyl titanate, polyhydroxytitanium stearate, titanium (oxy)acetylacetonate, and titanium tetraacetylacetonate; and liquid products obtained by mixing an alcohol, a compound containing a group 2 metal in the long-form periodic table, a phosphate ester compound, and a titanium compound; are especially preferred.

Specific examples of the zirconium compound include zirconium tetraacetate, zirconium acetate hydroxide, zirconium tris(butoxy)stearate, zirconyl diacetate, zirconium oxalate, zirconyl oxalate, potassium zirconium oxalate, polyhydroxyzirconium stearate, zirconium ethoxide, zirconium tetra-n-propoxide, zirconium tetraisopropoxide, zirconium tetra-n-butoxide, zirconium tetra-t-butoxide, zirconium tributoxyacetylacetonate, and mixtures thereof.

Among these, zirconyl diacetate, zirconium tris(butoxy)stearate, zirconium tetraacetate, zirconium acetate hydroxide, ammonium zirconium oxalate, potassium zirconium oxalate, polyhydroxyzirconium stearate, zirconium tetra-n-propoxide, zirconium tetraisopropoxide, zirconium tetra-n-butoxide, and zirconium tetra-t-butoxide are preferred. Zirconyl diacetate, zirconium tetraacetate, zirconium acetate hydroxide, zirconium tris(butoxy)stearate, ammonium zirconium oxalate, zirconium tetra-n-propoxide, and zirconium tetra-n-butoxide are more preferred. Zirconium tris(butoxy) stearate is especially preferred since a polyester with no coloring, and with a high degree of polymerization, can be easily obtained therewith.

Specific examples of the germanium compound include inorganic germanium compounds such as germanium oxide and germanium chloride; and organic germanium compounds such as tetraalkoxygermanium. From the viewpoint of the cost, availability, and the like, germanium oxide, tetraethoxygermanium, tetrabutoxygermanium, and the like are preferred. Germanium oxide is especially preferred.

Examples of the iron compound include inorganic chlorides such as ferric chloride; inorganic oxides such as ferrosoferric oxide; and organic iron complexes such as ferrocene. Inorganic oxides are especially preferred.

Other examples of the metal-containing compound include scandium compounds such as scandium carbonate, scandium acetate, scandium chloride, and scandium acetylacetonate; yttrium compounds such as yttrium carbonate, yttrium chloride, yttrium acetate, and yttrium acetylacetonate; vanadium compounds such as vanadium chloride, vanadium trichloride oxide, vanadium acetylacetonate, and vanadium acetylacetonate oxide; molybdenum compounds such as molybdenum chloride and molybdenum acetate; tungsten compounds such as tungsten chloride, tungsten acetate, and tungstic acid; and lanthanoid compounds such as cerium chloride, samarium chloride, and ytterbium chloride.

In such cases where a metal compound is used as the polycondensation catalyst, the amount of the catalyst added in terms of the amount of the metal with respect to the polyester produced is usually not less than 0.1 ppm by mass, preferably not less than 0.5 ppm by mass, more preferably not less than 1 ppm by mass regarding the lower limit, and is usually not more than 3000 ppm by mass, preferably not more than 1000 ppm by mass, more preferably not more than 250 ppm by mass, especially preferably not more than 130 ppm by mass regarding the upper limit. Use of too much catalyst is economically disadvantageous. Moreover, it leads to an increase in the concentration of carboxyl termini in the polyester for a reason that has not yet been clarified in detail, and the increases in the amount of carboxyl termini and the residual catalyst concentration may result in poor thermal stability and poor hydrolysis resistance of the polyester. On the other hand, in cases where the amount of the catalyst is too small, the polymerization activity decreases to induce thermal degradation of the polyester during the production of the polyester, so that a polyester showing practically useful physical properties can be hardly obtained.

The point of addition of the catalyst to the reaction system is not limited as long as it is in or before the polycondensation reaction step, and the catalyst may be added upon feeding of the raw material. However, under conditions where a large amount of water is present or generated, coexistence of the catalyst with the water may lead to deactivation of the catalyst, and may cause precipitation of foreign matter and hence deterioration of the quality of the product. Therefore, the catalyst is preferably added in or after the esterification reaction step.

<Reaction Tank>

The esterification reaction tank used in the present invention can be any known esterification reaction tank. The esterification reaction tank may be of any type including a vertical stirring complete mixing tank, a vertical heat convective mixing tank, and a tower continuous reaction tank. The esterification reaction tank may be a single tank, or a plural tanks in which the same kind or different kinds of tanks are linearly arranged. In particular, a reaction tank equipped with a stirrer is preferred. The stirrer may be of a normal type containing a power unit, a bearing, a shaft, and a stirring blade, or of a high-speed rotation type such as a turbine-stator-type high-speed rotating stirrer, a disk-mill-type stirrer, or a rotor-mill-type stirrer.

The mode of the stirring is also not limited, and the stirring may be carried out by a normal stirring method in which the reaction liquid in the reaction tank is directly stirred from an upper part, a lower part, a side part, or the like of the reaction tank, or by a method in which part of the reaction liquid is taken out to the outside of the reaction tank through piping or the like and stirred with a line mixer or the like while allowing circulation of the reaction liquid. The stirring blade may also be selected from known types of stirring blades, and specific examples of the stirring blade include a propeller blade, a screw blade, a turbine blade, a fan turbine blade, a disk turbine blade, a Pfaudler blade, a Fullzone blade, and a Maxblend blade.

The type of the polycondensation reaction tank used in the present invention is not limited, and examples of the polycondensation reaction tank include a vertical stirred polymerization tank, a horizontal stirred polymerization tank, and a thin-film evaporation polymerization tank. The polycondensation reaction tank may be a single tank, or may also be a plurality of tanks in which the same kind or different kinds of a plurality of tanks are linearly arranged. However, in the late stage of the polycondensation, in which the reaction liquid has increased viscosity, it is preferred to choose a horizontal stirred polymerization tank having a thin-film evaporation function since it has excellent interface renewal properties, plug flow properties, and self-cleaning properties.

<Pelletization Step>

The polyester obtained through the esterification reaction step is pelletized, and then subjected, in the form of the pellet, to the contact treatment using the contact treatment liquid.

Examples of commonly employed methods of pelletization include the strand cutting method, in which molten polyester is extruded from a nozzle hole of a die head using a gear pump or an extruder, and the resulting strand is cut using a cutter while the strand is cooled with water or after the strand is cooled and solidified; and the underwater hot cutting method, in which polyester is extruded from a nozzle hole into water followed by immediately cutting the polyester in the molten state. For the polyester of the present invention, the underwater hot cutting method is preferably employed from the viewpoint of the facts that only a small amount of offcuts are included in the pellet, that the angle of repose of the obtained pellet is low, that favorable pellet transfer stability can be achieved, and that favorable stability of feeding into a molding machine can be achieved during molding, in this method. The cooling water temperature in the underwater hot cutting method is preferably not less than 10°C, more preferably not less than 20°C regarding the lower limit, and is preferably not more than 70°C, more preferably not more than 60°C, still more preferably not more than 50°C regarding the upper limit.

The nozzle hole usually has a hole diameter of 1 mm to 30 mm. The shape of the opening is not limited, and may be, for example, a circular shape, an elliptical shape, an oval shape, a rectangular shape, or a star shape. The discharge rate per opening is usually 5 to 100 kg/hour, preferably 10 to 70 kg/hour, more preferably 20 to 50 kg/hour.

The shape of the pellet may be, for example, a spherical shape, a cylindrical shape, an elliptic cylindrical shape, an oval cylindrical shape, a prismatic shape, or a cocoon shape; or a flattened shape thereof. In the underwater hot cutting method, the pellet tends to have a spherical shape or a cocoon shape; or a flattened shape thereof. The size of the pellet is not limited. From the viewpoints of, for example, the CD extraction efficiency in the contact treatment, the drying efficiency in the drying step, and the pellet transfer operability, the weight of each single pellet is 1 to 50 mg, preferably 3 to 40 mg, more preferably 5 to 30 mg. The larger the pellet surface area per mass, the more preferred from the viewpoint of the extraction efficiency in the contact treatment step.

<Contact Treatment Step>

In the present invention, the pellet obtained in the pelletization step is subjected to a treatment in which the pellet is brought into contact with a contact treatment liquid (which may be referred to as contact treatment in the present description), to extract CD contained in the pellet into the contact treatment liquid, to thereby reduce the CD content in the pellet.

The contact treatment liquid used in the present invention is not limited as long as the treatment liquid allows extraction of cyclic dimers contained in the polyester pellet. Examples of the contact treatment liquid include alcohols such as methanol, ethanol, isopropanol, and butanol; ketones such as acetone, methyl ethyl ketone, and cyclohexanone; ethers such as diisopropyl ether and 1,4-dioxane; esters such as ethyl acetate, butyl acetate, and isopropyl acetate; and water. Among these, from the viewpoint of the ease of handling, the cost, the extraction efficiency, and the like, the contact treatment liquid is preferably a mixture of an alcohol and water. In cases where the polyester is used for a food contact application, the contact treatment liquid is more preferably a mixture of water and ethanol from the viewpoint of safety for the human body.

Although the contact treatment step is usually carried out continuously after the pelletization, the pellet obtained may be temporarily stored in a storage tank before the contact treatment.

(Composition of Contact Treatment Liquid)

In cases where the contact treatment liquid to be brought into contact with the polyester pellet contains water, usually, the ratio of the water to the total contact treatment liquid is preferably not less than 10% by mass, more preferably not less than 20% by mass, still more preferably not less than 25% by mass. The ratio is usually not more than 99% by mass, preferably not more than 95% by mass, more preferably not more than 90% by mass, especially preferably not more than 85% by mass.

In cases where the mixing ratio of water is low, the molecular weight tends to decrease due to hydrolysis by the alcohol, ketone, or ester, resulting in a poor quality of the polyester. In cases where the amount of the alcohol, ketone, or ester used is high, the contact treatment liquid needs to be carefully handled from the viewpoint of safety since, for example, there is an increased risk of explosion of the liquid and the gas generated from the liquid, during the use. On the other hand, in cases where the ratio of the water exceeds the upper limit, removal of cyclic oligomers is insufficient, and hence the CD content cannot be sufficiently reduced, so that a polyester having a desirable quality may not be obtained.

The lower limit of the concentration of the cyclic dimers with respect to the total contact treatment liquid to be brought into contact with the polyester pellet is preferably 100 ppm by mass, more preferably 300 ppm by mass, still more preferably 500 ppm by mass from the viewpoints of the process and the cost, such as an increase in the cost due to an increased size of the cyclic dimer removal equipment, disposal of the used treatment liquid, and an increase in the purification volume. The upper limit is 3500 ppm by mass, preferably 3000 ppm by mass, more preferably 2500 ppm by mass.

In cases where the concentration of the cyclic dimers exceeds the upper limit, removal of oligomers is insufficient, and the cyclic dimer content in the polyester pellet cannot be sufficiently reduced, so that a polyester having a desirable quality may not be obtained.

(Contact Temperature)

The lower limit of the temperature of the contact treatment liquid at the time when the polyester pellet is brought into contact with the contact treatment liquid is preferably 25°C, more preferably 30°C, still more preferably at 35°C, especially preferably 40°C. The upper limit is usually the melting point of the polyester, and is preferably 95°C, more preferably 90°C, especially preferably 85°C. In cases where the contact temperature is less than the lower limit, a long treatment time is required, which is economically disadvantageous. Moreover, the oligomer removal effect decreases, and hence a polyester having a desirable quality may not be obtained. On the other hand, in cases where the contact temperature exceeds the upper limit, a significant decrease in the viscosity occurs due to hydrolysis and alcoholysis, resulting in deterioration of the quality. Moreover, the operation becomes difficult due to fusion of pellets to each other, poor extraction of pellets, and the like.

(Contact Time)

The lower limit of the length of time of the contact between the polyester pellet and the contact treatment liquid is usually 0.1 hours, preferably 1 hour, more preferably 3 hours. The upper limit is usually 24 hours, preferably 18 hours, more preferably 10 hours. In cases where the contact time is less than the lower limit, removal of oligomers may be insufficient, and hence a polyester having a desirable quality may not be obtained. On the other hand, in cases where the contact time exceeds the upper limit, a remarkable decrease in the viscosity may occur due to hydrolysis and alcoholysis, and hence the quality may deteriorate.

(Ratio between Polyester Pellet and Contact Treatment Liquid)

The ratio between the polyester pellet and the contact treatment liquid to be brought into contact with each other (treatment liquid/pellet ratio) is usually not less than 1.0, preferably not less than 1.5, more preferably not less than 2.0 regarding the lower limit in terms of the mass ratio. Regarding the upper limit, the ratio is usually not more than 50, preferably not more than 30, more preferably not more than 20. In cases where the mass ratio between the pellet and the liquid to be brought into contact with each other is less than the lower limit, the CD concentration in the contact treatment liquid during the treatment increases to decrease the CD removal effect, so that a polyester having a desirable quality may not be obtained. On the other hand, in cases where the mass ratio between the pellet and the liquid to be brought into contact with each other exceeds the upper limit, there are disadvantages from the viewpoints of the process and the cost, such as an increased size of the equipment and an increased cost of the contact treatment liquid due to an increase in the amount of the contact treatment liquid used.

(Contact Method)

Examples of the mode of bringing the polyester pellet into contact with the contact treatment liquid include a batch method and a continuous method, and either mode may be employed.
Examples of the mode of the batch method in the present invention include a method in which pellets and the contact treatment liquid are placed in a treatment tank, and subjected to the contact treatment at a predetermined temperature for a predetermined length of time, followed by extraction. The contact treatment between the pellets and the contact treatment liquid may be carried out under circulation of the contact treatment liquid, or may be carried out without the circulation.
Examples of the mode of the continuous method in the present invention include a method in which, while pellets are continuously supplied into, and continuously extracted from, piping or a treatment tank, a contact treatment liquid at a predetermined temperature is brought into contact with the pellets by allowing the contact treatment liquid to flow in the co-current or counter-current direction relative to the flow of the pellets such that a predetermined contact time is secured.

<Separation Step>

The contact treatment liquid after the contact treatment contains cyclic dimers. Therefore, when necessary, the cyclic dimers may be separated in the separation step, to control the concentration of cyclic dimers in the entire contact treatment liquid that is to be brought into contact with the polyester pellet in the contact treatment step. In cases where the contact treatment liquid is recycled for reuse, cyclic dimers are preferably separated in the separation step since, by this, the concentration of cyclic dimers in the entire contact treatment liquid that is to be brought into contact with the polyester pellet in the contact treatment step can be controlled within the desired range, and hence the amount of cyclic dimers contained in the polyester pellet obtained can be easily reduced.
The separator used in the separation step is not limited as long as cyclic dimers can be separated from the contact treatment liquid. Specific examples of the separator include distillation columns, crystallizers, thin-film evaporators, and centrifuges.
After separating at least part of the cyclic dimers to adjust the cyclic dimer content in the contact treatment liquid, the resulting liquid can be recycled for reuse as the contact treatment liquid in the contact treatment step described above. The separation ratio, which is the ratio of the contact treatment liquid supplied to the separator (XI) through the supply line (111), out of the contact treatment liquid recovered by the recovery line (106) after being brought into contact with the polyester pellet in the contact treatment tank (III), may be not less than 20% by mass, not less than 25% by mass, not less than 30% by mass, not less than 35% by mass, not less than 40% by mass, not less than 45% by mass, not less than 50% by mass, or not less than 55% by mass, or may be not less than 90% by mass from the viewpoint of achieving both recycling of the contact treatment liquid and the quality of the polyester pellet obtained. The upper limit of the separation ratio is 100% by mass. In cases where the separation ratio is less than the lower limit, cyclic dimers accumulate in the contact treatment liquid, and hence a polyester having a desirable quality may not be obtained. Furthermore, the separated cyclic dimers can be supplied to the esterification reaction step or the polycondensation step, to be used as a raw material of the polyester. In a preferred method, the separated cyclic dimers are returned into the esterification reaction tank in the esterification reaction step, or into the slurry tank for the dicarboxylic acid component and the diol component.
The contact treatment liquid after the separation step may be recycled as it is for reuse, or fresh contact treatment liquid in an amount corresponding to the amount of the contact treatment liquid extracted together with the separated cyclic dimers may be added thereto.

<Drying Step>

Since the polyester pellet that has been subjected to the contact treatment contains the contact treatment liquid, the pellet is preferably dried in the drying step in order to remove these.
Examples of the dryer used in the drying step include those in which heated air or an inert gas such as heated nitrogen is allowed to flow as a drying gas, such as shelf-type dryers, band dryers, horizontal cylindrical rotary dryers, horizontal dryers with rotary blades, vertical dryers with rotary blades (the so-called hopper dryers), vertical moving bed dryers, and fluidized bed dryers. Examples of dryers employing other gas flow methods include double-cone-type rotary vacuum dryers, tumbler-type rotary vacuum dryers, and microwave dryers.
Although these may be used in a batch method, a semi-batch method, or a continuous method, a continuous method is preferred in cases of mass production from the viewpoint of the production efficiency. From the viewpoint of avoiding use of complex equipment, it is preferred to use a vertical moving bed dryer, or a plurality of stages of vertical moving bed dryers arranged in series.
The lower limit of the drying temperature in terms of the gas temperature is usually 25°C, preferably 30°C, more preferably 35°C, especially preferably 40°C. The upper limit is usually the melting point of the polyester, preferably the

melting point of the polyester minus 5°C, more preferably the melting point of the polyester minus 8°C, especially preferably the melting point of the polyester minus 10°C. In cases where the drying temperature is less than the lower limit, a long drying time is required, which is economically disadvantageous. On the other hand, in cases where the drying temperature exceeds the upper limit, the operation becomes difficult due to fusion of pellets to each other, poor extraction of pellets from the dryer, and the like. Although the drying gas that has passed through the dryer contains components of the contact treatment liquid, it can be reused as the drying gas after reducing the components of the contact treatment liquid by subjecting the drying gas to cooling, adsorption, or the like.

The drying time is usually 0.1 hours to 100 hours, preferably 1 to 80 hours, more preferably 5 to 50 hours. In cases where a moving bed process is employed, the flow rate of the drying gas is usually 0.05 to 1.0 m/second (superficial velocity). The upper limit of the contact treatment liquid content in the dried pellet is usually 2000 ppm by mass, preferably 1500 ppm by mass, more preferably 1000 ppm by mass. In cases where the contact treatment liquid is contained in a large amount, the melt viscosity of the pellet tends to be remarkably low during melt molding, resulting in poor moldability. Regarding the lower limit, the content is preferably as low as possible. However, from an industrial point of view, a concentration that can be reasonably achieved is usually 50 ppm by mass.

<Example of Production Process>

As an example, a preferred embodiment of the method of producing a polyester is described below for a case where succinic acid as the dicarboxylic acid component, 1,4-butanediol (which may be hereinafter simply referred to as BG) as the diol component, and malic acid as the polyfunctional compound are used as raw materials. However, the present invention is not limited thereto.

The preferred embodiment of the method of producing a polyester is described below based on the accompanying drawings. Fig. 1 is a diagram illustrating one example of the esterification reaction step employed in the present invention. Fig. 2 is a diagram illustrating one example of the polycondensation step employed in the present invention.

As in Fig. 1, succinic acid and malic acid as raw materials are usually mixed with BG in a raw material mixing tank (not shown), and supplied, in the form of a slurry or a liquid, through a raw material supply line (1) into an esterification reaction tank (A). In cases where a catalyst is added at the time of the esterification reaction, a catalyst solution is prepared as a solution in BG in a catalyst preparation tank (not shown), and then the catalyst solution is supplied to a catalyst supply line (3). Fig. 1 illustrates a mode in which the catalyst supply line (3) is connected to a 1,4-butanediol recycle line (2) such that these are mixed together and then supplied to the liquid-phase portion in the esterification reaction tank (A).

The gas distilled from the esterification reaction tank (A) passes through a distillation line (5), and is separated into a high-boiling component and a low-boiling component in a rectifying column (C). Usually, the main component of the high-boiling component is 1,4-butanediol, and the main component of the low-boiling component is tetrahydrofuran (which may be hereinafter simply referred to as THF), which is a degradation product of water and BG.

The high-boiling component separated in the rectifying column (C) is extracted from an extraction line (6), and passed through a pump (D). Part of the component is then recycled through the recycle line (2) into the esterification reaction tank (A), and another part of the component is returned through a circulation line (7) into the rectifying column (C). Further, the remaining part is extracted from an extraction line (8) to the outside. On the other hand, the light-boiling component separated in the rectifying column (C) is extracted from a gas extraction line (9), condensed in a condenser (G), and then temporarily stored in a tank (F) through a condensate line (10). Part of the light-boiling component collected in the tank (F) is returned through an extraction line (11), a pump (E), and a circulation line (12) into the rectifying column (C), and the remaining part is extracted to the outside through an extraction line (13). The condenser (G) is connected to an exhauster (not shown) through a vent line (14). The esterification reaction product generated in the esterification reaction tank (A) is supplied through an extraction pump (B) and an esterification reaction product extraction line (4) into a first polycondensation reaction tank (a) illustrated in Fig. 2.

In the process shown in Fig. 1, the catalyst supply line (3) is connected to the recycle line (2). However, these may be separate from each other. The raw material supply line (1) may be connected to the liquid-phase portion of the esterification reaction tank (A).

In cases where a catalyst is added to the esterification reaction product before the polycondensation tank, the concentration of the catalyst is adjusted to a predetermined concentration in a catalyst preparation tank (not shown), and then the catalyst is passed through a catalyst supply line (L7) in Fig. 2, which is connected to a raw material supply line (L8). After being further diluted with BG, the catalyst is supplied to the esterification reaction product extraction line (4).

Subsequently, the esterification reaction product, supplied from the esterification reaction product extraction line (4) into the first polycondensation reaction tank (a) through a filter (p), is polycondensed under reduced pressure, to become a low polyester polymer. Thereafter, the polymer is supplied into a second polycondensation reaction tank (d) through an extraction gear pump (c), an extraction line (L1), and a filter (q). Usually, in the second polycondensation reaction tank (d), polycondensation reaction further proceeds at a pressure lower than in the first polycondensation reaction tank (a). The resulting polycondensate is supplied into a third polycondensation tank (k) through an extraction

gear pump (e), and then through an extraction line (L3) and a filter (r) that form an outlet channel. The third polycondensation reaction tank (k) is a horizontal reaction tank constituted by a plurality of stirring blade blocks, and equipped with a twin-screw self-cleaning-type stirring blades. The polycondensation reaction product that has been introduced from the second polycondensation reaction tank (d) into the third polycondensation reaction tank (k) through the extraction line (L3) further undergoes polycondensation reaction, and is then transferred to the pelletization step.

In the pelletization step, the polyester, in the molten state, is passed through an extraction gear pump (m), and then through a filter (s) and an extraction line (L5) that form an outlet channel. Thereafter, the polyester is extracted from a die head (g) into the atmosphere in the form of a molten strand, and then cooled with water or the like. The polyester is then cut using a rotary cutter (h) to prepare polyester pellets. Instead of extracting the polyester into the atmosphere, it may be extracted into water in the form of a strand, and then cut using a rotary underwater cutter to prepare pellets.

The symbols (L2), (L4), and (L6) in Fig. 2 are vent lines for the first polycondensation reaction tank (a), the second polycondensation reaction tank (d), and the third polycondensation reaction tank (k), respectively. All of the filters (p), (q), (r), and (s) do not necessarily need to be placed. They may be placed as appropriate taking into account the foreign matter removal effect and the operational stability.

Fig. 3 is a diagram illustrating one example of the contact treatment step and the separation step employed in the present invention. The contact treatment liquid is transferred from a circulation tank (I) into a heat exchanger (II) by means of a pump (IX), and undergoes temperature control. The contact treatment liquid is then supplied into a treatment tank (III) through a contact treatment liquid supply line (101). After the contact treatment liquid is brought into contact with the pellets by means of a counter-current in the treatment tank, the liquid is extracted from an extraction line (102), and passed through a fine powder remover (IV). Part of the liquid is then passed through a supply line (111) and a separator (XI), and recovered into the circulation tank (I). The remaining part of the liquid is recovered into the circulation tank (I) through an extraction line (110). From the contact treatment liquid supplied to the separator (XI), cyclic oligomers including cyclic dimers are separated, and the contact treatment liquid thereafter is recovered into the circulation tank (I) through an extraction line (113). The separated cyclic oligomers including cyclic dimer are extracted to the outside through an extraction line (112). A supply line (108) supplies the contact treatment liquid in the amount corresponding to the amount of the contact treatment liquid extracted together with the separated cyclic dimers from the extraction line (112).

The pellets to be subjected to the contact treatment are continuously supplied from a pellet supply line (103), and the contact treatment with the contact treatment liquid is carried out for a predetermined length of time. The pellets are then continuously extracted from an extraction line (104) while the extraction amount is controlled by a rotary valve (V). The contact treatment liquid extracted together with the pellets is separated in a preliminary solid-liquid separator (VI), and returned into the recovery line (106) through a recovery tank (VII), and then through a supply line (105) by means of a pump (X). The pellets continuously extracted are separated from the accompanying contact treatment liquid in the preliminary solid-liquid separator, and then continuously supplied to the drying step through a solid-liquid separator (VIII).

Fig. 4 is a diagram illustrating one example of the drying step employed in the present invention. The figure illustrates an example equipped with the two drying columns (I) and (K).

The polyester pellets after the contact treatment step are continuously supplied to the first drying column (I) through a pellet supply line (201). A heated drying nitrogen gas is continuously introduced into the first drying column from a supply line (208), and discharged from a gas recovery line (207). The discharged gas is passed through a condenser (L), and then heated in a heat exchanger (N), followed by being transferred to the first drying column through a supply line (208) for recycling use. The contact treatment liquid condensed in the condenser (L) and a heat exchanger (M) is extracted from an extraction line (210). A fresh drying gas supply line (209) supplies fresh dry nitrogen gas. The pellets are continuously transferred from the first drying column into a cooling column (J) through a rotary valve (O). Dry air is introduced into the cooling column from a cooling gas supply line (212), and released from a cooling gas extraction line (211).

The pellets, cooled to a temperature lower than the drying temperature in the first drying column, are supplied to the second drying column (K) through a pellet extraction line (204), a rotary valve (P), and a pellet supply line (205). Drying gas (usually air) is supplied to the second drying column through a heat exchanger (S) and a drying gas supply line (214), and discharged from an extraction line (213).

The dried polyester pellets are continuously or intermittently extracted through a rotary valve (Q) and a pellet extraction line (206), and then passed through a storage tank, a fine powder remover, a packaging machine, and the like to become a product. The storage tank can also serve as the second drying column. The present figure does not illustrate the storage tank and the process thereafter.

The cyclic dimer content in the polyester obtained by the present invention is preferably not less than 1 ppm by mass, more preferably not less than 100 ppm by mass, still more preferably not less than 500 ppm by mass, especially preferably not less than 1000 ppm by mass regarding the lower limit. The content is usually not more than 3500 ppm by mass, preferably not more than 3300 ppm by mass, more preferably not more than 3000 ppm by mass, especially preferably not more than 2500 ppm by mass, most preferably not more than 2000 ppm by mass regarding the upper limit. In cases where the amount of the cyclic dimers is less than the lower limit, a favorable quality can be achieved. However, since the length of time required for the removal of oligomers increases, the size of the equipment needs to be increased,

and this is economically disadvantageous. In cases where the amount of the cyclic dimers exceeds the upper limit, when the polyester is left to stand for a certain period after the molding, the polyester may have defects such as opacity (which has the same meaning as bleeding out or the whitening phenomenon) of the surface resulting in disappearance of the surface gloss. Furthermore, in cases where the polyester is used for a food contact application, the cyclic dimer content in the polyester is preferably not more than 2000 ppm by mass from the viewpoint of suppressing elution of the oligomers into the food.

In cases where the polyester is used for a food contact application, from the viewpoints of odor, and safety for the human body, the content of the THF by-produced during the production process in the polyester obtained in the present invention is preferably not more than 20 ppm by mass, more preferably not more than 15 ppm by mass. The production method of the present invention can reduce the THF as well as the cyclic dimers contained in the polyester.

<Polyester Composition>

The polyester of the present invention may be a polyester containing: a repeating structural unit derived from a diol containing 1,4-butanediol; and a repeating structural unit derived from a dicarboxylic acid. The polyester may be, for example, an aliphatic polyester or an aromatic-aliphatic copolymer polyester. Specifically, the polyester may be polybutylene succinate (PBS), polybutylene succinate adipate (PBSA), polybutylene adipate terephthalate (PBAT), polybutylene succinate terephthalate (PBST), or polybutylene succinate adipate terephthalate (PBSAT). As long as the effect is not deteriorated, the polyester of the present invention may also contain other aliphatic polyesters, aromatic-aliphatic copolymer polyesters, aliphatic oxycarboxylic acids, and the like. Further, in addition to carbodiimide compounds, fillers, and plasticizers that are used when necessary, and as long as the effect of the present invention is not inhibited, the polyester of the present invention may contain other biodegradable resins such as polycaprolactone, polyamide, polyvinyl alcohol, and cellulose esters; animal/plant fine powder materials such as starch, cellulose, paper, wood flour, chitin-chitosan materials, coconut shell powders, and walnut shell powders; or mixtures thereof. Furthermore, for the purpose of adjusting physical properties and processability of the molded product, the polyester of the present invention may contain additives such as thermal stabilizers, plasticizers, lubricants, antiblocking agents, nucleating agents, inorganic fillers, coloring agents, pigments, UV absorbers, and light stabilizers; modifiers; cross-linking agents; and the like.

Examples of the method of producing the polyester composition of the present invention include, but are not limited to, a method in which blended raw material chips for the polyester are melt-mixed in the same extruder, a method in which those chips are melt in separate extruders and then mixed together, and a method in which those chips are mixed together by kneading in an ordinary kneader such as a single-screw extruder, a twin-screw extruder, a banbury mixer, a roll mixer, a Brabender Plastograph, or a kneader blender. Alternatively, the raw material chips may be directly supplied to a molding machine to prepare a composition and, at the same time, obtain a molded product thereof.

A polyester containing: a repeating structural unit derived from a diol containing 1,4-butanediol; and a repeating structural unit derived from a dicarboxylic acid; the polyester having a cyclic dimer content of not more than 2000 ppm by mass; is preferably used as a food contact film after a process such as molding.

Similarly, a polyester composition that contains a polyester containing: a repeating structural unit derived from a diol containing 1,4-butanediol; and a repeating structural unit derived from a dicarboxylic acid; the polyester having a cyclic dimer content of not more than 2000 ppm by mass; is preferably used as a food contact film after a process such as molding.

In particular, the food contact film is a film that is used in contact with food, for example, in order to prevent contact between different foods.

In the cases of use as a food contact film, the film thickness is not limited, and is usually 0.01 $\mu$m to 1000 $\mu$m. The shape of the film is also not limited, and examples of the shape include rectangular shapes such as squares and rectangles; circular shapes; oval shapes; diamond shapes; and strip shapes.

EXAMPLES

The present invention is described below in more detail by way of Examples. However, the present invention is not limited to the following Examples at all as long as the gist of the present invention is not deteriorated. The measurement methods for the physical properties and the evaluation items employed in the following cases are as follows.

<Intrinsic Viscosity (IV); dL/g>

The intrinsic viscosity of a polyester was determined using an Ubbelohde viscometer in the following manner. Polyester pellets were dissolved in a mixed solvent of phenol/tetrachloroethane (mass ratio, 1/1) to prepare a polymer solution with a concentration of 0.5 g/dL. The number of seconds required for dropping was measured for each of the polymer solution and the solvent alone at 30°C, and calculation was performed according to the following Equation (1).

$$IV = ((1 + 4K_H\eta_{sp})^{0.5} - 1) / (2K_HC) \ ... \ (1)$$

In Equation (1), $\eta_{SP} = \eta / \eta_0 - 1$, wherein $\eta$ is the number of seconds required for dropping of the sample solution; $\eta_0$ is the number of seconds required for dropping of the solvent; C is the sample solution concentration (g/dL); and $K_H$ is a Huggins constant. As $K_H$, 0.33 was employed.

<Esterification Ratio (%)>

According to the following Calculation Equation (2), calculation was performed based on the sample acid value and the saponification value. The acid value was determined by heating 0.3 g of an esterification reaction product sample in 40 mL of benzyl alcohol at 180°C for 20 minutes, cooling the heated mixture for 10 minutes, and then performing titration with 0.1 mol/L potassium hydroxide/methanol solution. The saponification value was determined by hydrolyzing oligomers in 0.5 mol/L potassium hydroxide/ethanol solution, and then performing titration with 0.5 mol/L hydrochloric acid.

$$\text{Esterification ratio (\%)} = (\text{saponification value} - \text{acid value}) / \text{saponification value} \times 100 \ ... \ (2) \qquad (2)$$

<Quantification of Cyclic Dimer Content in Pellets; ppm by Mass>

After precisely weighing 0.5 g of polyester pellets, 10 mL of chloroform was added to the pellets, and the pellets were dissolved at room temperature, followed by slowly adding 30 mL of an ethanol/water mixture (volume ratio, 4/1) dropwise thereto with stirring to allow precipitation of the polymer component. Fifteen minutes thereafter, the stirring was stopped, and separation was allowed to proceed by leaving the mixture to stand for 90 minutes. Subsequently, 2 mL of the supernatant was collected, and then evaporated to dryness, followed by adding 2 mL of acetonitrile thereto to dissolve the sample. The sample was then filtered through a filter with a pore size of 0.45 μm, and applied to the high-performance liquid chromatography "Prominence", manufactured by Shimadzu Corporation. Elution was started using acetonitrile/water (volume ratio = 4/6) as the mobile phase, and allowed to proceed while continuously changing the composition of the mobile phase to acetonitrile/water (volume ratio = 9/1) by the high-pressure gradient method. The cyclic oligomer component was quantified using "CAPCELL PAK C-18 TYPE MGII", manufactured by Osaka Soda Co., Ltd., and the amount was expressed in ppm by mass with respect to the pellets. As the detector, a UV detector was used. Detection wavelengths of 210 nm and 254 nm were employed.

For the quantification of cyclic dimers, the absolute calibration curve method using a pure cyclic dimer product was employed. The pure cyclic dimer product was obtained as follows. Specifically, polymer pellets obtained by polymerizing a carboxylic acid component and a diol component were stirred in acetone at 50°C for 12 hours, to perform contact treatment of the oligomer component. After the completion of the contact treatment, the pellets were removed by filtration, and solids were obtained by evaporating acetone from the acetone solution that had been used for the contact treatment of the oligomer component. The solids were dissolved in acetone at 50°C to prepare a saturated solution, and then the solution was cooled slowly. The supernatant was discarded, and needle-like precipitates were extracted. This recrystallization operation was further repeated several times to carry out purification. According to 1H-NMR analysis and high-performance liquid chromatography, the needle-like precipitates were confirmed to be cyclic dimers. Oligomer components other than cyclic dimers were identified by LC-MS analysis, and their quantitative calculation was performed based on the area value of each oligomeric component relative to the area value of the cyclic dimers and the factors in high-performance liquid chromatography.

<Quantification of Amount of Terminal Carboxyl Groups (Acid Value); Equivalents/Ton>

After pulverizing the polyester pellets, the pellets were dried in a hot-air dryer at 140°C for 15 minutes. The pellets were then cooled to room temperature in a desiccator. From the resulting polyester sample, **0.1** g of a sample was precisely weighed and collected into a test tube, and 3 mL of benzyl alcohol was added thereto, followed by dissolving the sample at 195°C for 3 minutes while blowing dry nitrogen gas therein. Subsequently, 5 $cm^3$ of chloroform was slowly added thereto, and the resulting mixture was allowed to cool to room temperature. To this solution, one or two drops of a phenol red indicator were added, and titration was performed with a solution of 0.1 mol/L sodium hydroxide in benzyl alcohol with stirring while blowing dry nitrogen gas therein. The titration was stopped at the time when the color turned from yellow to red. In addition, to provide a blank, the same operation was carried out without adding the polyester sample. The amount of terminal carboxyl groups (acid value) was calculated according to the following Equation (3).

$$\text{Amount of terminal carboxyl groups (equivalents/ton)} = (a - b) \times 0.1 \times f/W \ ... \ (3) \qquad (3)$$

In the equation, a is the amount (μL) of the solution of 0.1 mol/L sodium hydroxide in benzyl alcohol required for the titration; b is the amount (μL) of the solution of 0.1 mol/L sodium hydroxide in benzyl alcohol required for the titration of the blank; W is the amount (g) of the polyester sample; and f is the titer of the solution of 0.1 mol/L sodium hydroxide in benzyl alcohol.

The titer (f) of the solution of 0.1 mol/L sodium hydroxide in benzyl alcohol was determined by the following method. In a test tube, 5 $cm^3$ of methanol was collected, and one or two drops as an indicator of an ethanol solution of phenol red were added thereto, followed by performing titration with 0.4 $cm^3$ of a solution of 0.1 mol/L sodium hydroxide in benzyl alcohol to the point of color change. Subsequently, 0.2 $cm^3$ of 0.1 mol/L aqueous hydrochloric acid solution with a known titer was collected as a standard solution and added thereto, followed by performing titration again with a solution of 0.1 mol/L sodium hydroxide in benzyl alcohol to the point of color change (these operations were carried out while blowing dry nitrogen gas). Thereafter, according to the following Equation (4), the titer (f) was calculated.

Titer (f) = titer of the 0.1 mol/L aqueous hydrochloric acid solution × amount (μL) of the 0.1 N aqueous hydrochloric acid solution collected/titration volume (μL) of the solution of 0.1 mol/L sodium hydroxide in benzyl alcohol ... (4) (4)

(Example 1)

[Preparation of Polycondensation Catalyst]

In a glass eggplant flask with a stirrer, 100 parts by mass of magnesium acetate tetrahydrate was placed, and 1500 parts by mass of absolute ethanol (with a purity of not less than 99% by mass) was further added thereto. In addition, 65.3 parts by mass of ethyl acid phosphate (the mixing mass ratio between the monoester form and the diester form was 45:55) was added thereto, and the resulting mixture was stirred at 23°C. Fifteen minutes later, complete dissolution of the magnesium acetate was confirmed, and then 122 parts by mass of tetra-n-butyl titanate was added thereto. The resulting mixture was continuously stirred for additional 10 minutes to obtain a homogeneous mixed solution. The mixed solution was transferred to an eggplant flask, and concentrated under reduced pressure using an evaporator in an oil bath at 60°C. One hour later, evaporation of most of the ethanol was achieved to obtain a translucent viscous liquid. The temperature of the oil bath was further increased to 80°C, and further concentration was performed under a reduced pressure of 5 Torr to obtain a viscous liquid. The catalyst in the liquid form was dissolved in 1,4-butanediol to adjust the titanium atom content to 3.36% by mass. The catalyst solution showed favorable storage stability in 1,4-butanediol, and did not show generation of precipitates for at least 40 days when the catalyst solution was stored at 40°C under a nitrogen atmosphere. The pH of the catalyst solution was 6.3.

[Method of Producing Polyester]

A polyester was produced as follows by the esterification step illustrated in Fig. 1 and the polycondensation step illustrated in Fig. 2. First, succinic acid, 1,4-butanediol, and malic acid were mixed together at ratios of 1.00 mole, 1.30 moles, and 0.0033 moles, respectively, to prepare a slurry at 50°C. The slurry was continuously supplied at 45.5 kg/hour from a slurry preparation tank (not shown), through the raw material supply line (1), to the esterification reaction tank (A) equipped with a stirrer, which tank had been preliminarily filled with a low-molecular-weight polyester product (esterification reaction product) with an esterification ratio of 99% by mass under a nitrogen atmosphere.

For the esterification reaction tank (A), the internal temperature was set to 230°C, and the pressure was set to 101 kPa. The resulting water, tetrahydrofuran, and excess 1,4-butanediol were distilled through the distillation line (5), and separated into a high-boiling component and a low-boiling component in the rectifying column (C). After the system became stable, the high-boiling component, at the bottom of the column, was partially extracted to the outside through the extraction line (8) such that the liquid level in the rectifying column (C) remained constant. On the other hand, the low-boiling component, which mainly contains water and tetrahydrofuran, was extracted in the form of a gas from the top of the column, and condensed in the condenser (G), followed by extraction to the outside from the extraction line (13) such that the liquid level in the tank (F) remained constant. At the same time, the whole amount of the component at the bottom of the rectifying column (C) (which contained not less than 98% by mass 1,4-butanediol) at 100°C was supplied through the recycle line (2), and in addition, 1,4-butanediol in the amount equimolar to the tetrahydrofuran generated in the esterification reaction tank was supplied from the raw material supply line (1), into the esterification reaction tank such that the molar ratio of 1,4-butanediol to the succinic acid therein was 1.30. The combined feed rate for the recycle line (2) and the raw material supply line (1) was 3.8 kg/hour. The amount of 1,4-butanediol converted to tetrahydrofuran was 0.042 mole per 1.00 mole of succinic acid (the THF conversion rate was 4.2 mol% per succinic acid).

The esterification reaction product produced in the esterification reaction tank (A) was continuously extracted through the esterification reaction product extraction line (4) by means of the pump (B) in order to control the liquid level

such that the average residence time of the liquid in the esterification reaction tank (A) in terms of the succinic acid unit was 3 hours. The esterification reaction product extracted from the extraction line (4) was continuously supplied into the first polycondensation reaction tank (a) in Fig. 2. After the system became stable, the esterification ratio of the esterification reaction product collected at the outlet of the esterification reaction tank (A) was 92.4%, and the amount of terminal carboxyl groups in the product was 884 equivalents/ton.

The catalyst solution preliminarily prepared by the above method was diluted with 1,4-butanediol to 0.12% by mass in terms of the titanium atom concentration in the catalyst preparation tank, and then continuously supplied at 1.4 kg/h through the supply line (L8) to the esterification reaction product extraction line (4) (the catalyst was added to the liquid phase of the reaction liquid). The feed rate was stable throughout the operation period.

For the first polycondensation reaction tank (a), the internal temperature was set to 240°C, and the pressure was set to 2.7 kPa. The liquid level was controlled such that the residence time was 120 minutes. An initial polycondensation reaction was carried out while water, tetrahydrofuran, and 1,4-butanediol were extracted from the vent line (L2), which was connected to a pressure reducer (not shown). The reaction liquid extracted was continuously supplied into the second polycondensation reactor (d). For the second polycondensation reactor (d), the internal temperature was set to 240°C, and the pressure was set to 400 Pa. The liquid level was controlled such that the residence time was 120 minutes. The polycondensation reaction was allowed to proceed further while water, tetrahydrofuran, and 1,4-butanediol were extracted from the vent line (L4), which was connected to a pressure reducer (not shown). The resulting polyester was continuously supplied into the third polycondensation reactor (k) through the extraction line (L3) by means of the extraction gear pump (e). For the third polycondensation reactor (k), the internal temperature was set to 240°C; the pressure was set to 130 Pa; and the residence time was set to 120 minutes. The polycondensation reaction was allowed to proceed further. The resulting polyester was continuously extracted in the form of a strand from the die head (g). While the strand was cooled with water, it was cut into pellets using the rotary cutter (h) to prepare pellets. The esterification reaction and the polycondensation reaction were continuously performed for 7 days while, from 16 hours after the start of the reaction, sampling was carried out every 8 hours for measurement of physical properties of the polyester. For each sample, the average value and the variation are described. The intrinsic viscosity was 1.80 ± 0.05 dL/g, and the pellet weight was 15 ± 1 mg/pellet. The polyester pellets had a stable quality. Table 1 shows the cyclic dimer content in the polyester pellet sample at this time point as the pellet property before the contact treatment.

[Contact Treatment of Polyester Pellets with Contact Treatment Liquid]

The polyester pellets obtained were subjected to the contact treatment by the contact treatment step illustrated in Fig. 3. The mixture of ethanol and water to be used as the contact treatment liquid was transferred, by means of the pump (IX), from the circulation tank (I) to the heat exchanger (II), where the temperature was adjusted to 70°C. The mixture was then supplied into the treatment tank (III) through the supply line (101). The ratio of ethanol (which may be hereinafter simply referred to as EtOH) to water in the contact treatment liquid was set such that water was contained at 60% by mass in the entire contact treatment liquid. The mass ratio between the contact treatment liquid and the pellets in the treatment tank was set to 5 (treatment liquid/pellets ratio).

The contact treatment liquid was brought into contact with the pellets by means of a counter-current in the treatment tank, and then extracted from the extraction line (102). Part of the extracted treatment liquid was supplied into the separator (XI) through the fine powder remover (IV), and the remaining part was recovered into the circulation tank (I). The pellets to be subjected to the contact treatment were continuously supplied from the supply line (103), and brought into contact with the contact treatment liquid for 4 hours. Thereafter, the pellets were continuously extracted from the extraction line (104) by means of the rotary valve (V). The contact treatment liquid extracted together with the pellets was separated in the preliminary solid-liquid separator (VI), and returned into the recovery line (106) through the recovery tank (VII), and then through the supply line (105) by means of the pump (X).

After the contact treatment liquid was supplied to the separator (XI), cyclic dimers were separated therefrom by the separator (XI) such that the concentration of cyclic dimers in the circulation tank (I) became 1000 ppm by mass. The cyclic dimers separated were extracted to the outside through the extraction line (112). At this time, the separation ratio was 52%. A distillation column was used as the separator (XI) for the separation of the cyclic dimers. From the supply line (108), ethanol and water in the amount corresponding to the amount of the contact treatment liquid extracted from the extraction line (112) together with the cyclic dimers were supplied to the circulation tank (I). In the preliminary solid-liquid separator (IV), the pellets continuously extracted were separated from the accompanying contact treatment liquid, and then continuously supplied to the drying step through the solid-liquid separator (VIII) and the extraction line (109).

[Drying of Pellets]

The drying was carried out by the drying step illustrated in Fig. 4. In the first drying column, dry nitrogen gas with a purity of not less than 99% (dew point, minus 40°C) was used; the gas temperature was 80°C; the gas (superficial) velocity

was 0.125 m/second; and the pellet residence time was 15 hours. In the second drying column, dry air at a temperature of 80°C (dew point, minus 40°C) was used; the gas (superficial velocity) was 0.125 m/second; and the pellet residence time was 24 hours.

The ratio of the intrinsic viscosity measured for the dried sample to the intrinsic viscosity before the contact treatment (IV retention rate, expressed in %), the cyclic dimer content in the dried sample, and the separation ratio are shown in Table 1.

(Example 2) to (Example 5), (Comparative Example 1), (Comparative Example 2)

Contact treatment was carried out in the same manner as in Example 1 except that the amount of cyclic dimers in the circulation tank (I), and the composition of the contact treatment liquid, were as shown in Table 1. The results are shown in Table 1.

(Example 6), (Example 7), (Comparative Example 3)

Contact treatment was carried out in the same manner as in Example 1, Example 3, or Comparative Example 1 except that isopropanol was used instead of the ethanol in the contact treatment liquid as shown in Table 2. The results are shown in Table 2.

(Example 8)

Production of a polyester was carried out in the same manner as in Example 1 except that the raw material slurry was prepared such that the ratio of malic acid was 0.0023 moles, to obtain polyester pellets. The resulting polyester had an intrinsic viscosity of 1.50 ± 0.05 dL/g, and the polyester pellets had a stable quality. The resulting pellets were subjected to the contact treatment in the same manner as in Example 1. The results are shown in Table 2.

(Example 9)

Production of a polyester was carried out in the same manner as in Example 1 except that the slurry was prepared by using 74 mol% succinic acid and 26 mol% adipic acid, and further blending malic acid and 1,4-butanediol at ratios of 0.0033 mole and 1.3 moles, respectively, per mole of these acids, to obtain polyester pellets. The resulting polyester had an intrinsic viscosity of 1.85 ± 0.05 dL/g, and the polyester pellets had a stable quality. The resulting pellets were subjected to the contact treatment in the same manner as in Example 2. The results are shown in Table 2.

(Example 10)

Production of a polyester was carried out in the same manner as in Example 1 except that the slurry was prepared by using 53 mol% adipic acid and 47 mol% terephthalic acid, and further blending trimethylolpropane and 1,4-butanediol at ratios of 0.0035 moles and 1.5 moles, respectively, per mole of these acids, to obtain polyester pellets. The resulting polyester had an intrinsic viscosity of 1.50 ± 0.05 dL/g, and the polyester pellets had a stable quality. The resulting pellets were subjected to the contact treatment in the same manner as in Example 2. The results are shown in Table 2.

The pellets obtained in Example 4 were pressed at 180°C using a manual hydraulic heat press "IMC-180C", manufactured by Imoto Machinery Co., Ltd., to prepare a film having a thickness of 50 μm.

[Table 1]

Table 1

| | | Unit / Evaluation Criterion | Example1 | Example2 | Example3 | Example4 | Example5 | Comparative Example1 | Comparative Example2 |
|---|---|---|---|---|---|---|---|---|---|
| | Resin type | | PBS | PBS | PBS | PBS | PBS | PBS | PBS |
| Composition of the contact treatment liquid | Alcohol type | | EtOH | EtOH | EtOH | EtOH | EtOH | EtOH | EtOH |
| | Water | % by mass | 60 | 60 | 60 | 10 | 10 | 60 | 10 |
| | Alcohol | % by mass | 40 | 40 | 40 | 90 | 90 | 40 | 90 |
| | CD | ppm by mass | 1000 | 0 | 3000 | 1000 | 3000 | 4000 | 4000 |
| Contact treatment conditions | Treatment temperature | °C | 70 | 70 | 70 | 70 | 70 | 70 | 70 |
| | Treatment time | Hours | 4 | 4 | 4 | 4 | 4 | 4 | 4 |
| Pellet property | CD | ppm by mass | 8232 | 8232 | 8232 | 8255 | 8255 | 8232 | 8255 |
| Pellet properties after the contact treatment | IV retention rate | % | 99.9 | 99.6 | 99.4 | 99.7 | 99.1 | 97.5 | 98.8 |
| | CD | ppm by mass | 2128 | 2163 | 2907 | 584 | 1910 | 3862 | 3979 |
| Ratio of the contact treatment liquid that has passed through the separator after the contact treatment (separation ratio) | | % | 52 | 100 | 23 | 57 | 27 | 16 | 15 |

[Table 2]

Table 2

| | | Unit / Evaluation Criterion | Example6 | Example7 | Example8 | Example9 | Example10 | Comparative Example3 |
|---|---|---|---|---|---|---|---|---|
| | Resin type | | PBS | PBS | PBS | PBSA | PBAT | PBS |
| Composition of the contact treatment liquid | Alcohol type | | Isopropanol | Isopropanol | EtOH | EtOH | EtOH | Isopropanol |
| | Water | % by mass | 60 | 60 | 60 | 60 | 60 | 60 |
| | Ethanol | % by mass | 40 | 40 | 40 | 40 | 40 | 40 |
| | CD | ppm by mass | 1000 | 3000 | 1000 | 0 | 0 | 4000 |
| Contact treatment conditions | Treatment temperature | °C | 70 | 70 | 70 | 70 | 70 | 70 |
| | Treatment time | Hours | 4 | 4 | 4 | 4 | 4 | 4 |
| Pellet property | CD | ppm by mass | 8252 | 8252 | 7626 | 8610 | 3280 | 8252 |
| Pellet properties after the contact treatment | IV retention rate | % | 100 | 98.8 | 99.3 | 100 | 97.2 | 98.9 |
| | CD | ppm by mass | 1389 | 3129 | 1836 | 2687 | 2506 | 3665 |
| Ratio of the contact treatment liquid that has passed through the separator after the contact treatment (separation ratio) | | % | 54 | 23 | 50 | 100 | 100 | 16 |

As shown in Table 1 and Table 2, in the cases where the cyclic dimer content in the contact treatment liquid was 4000 ppm by mass (Comparative Examples 1, 2, and 3), the cyclic dimer content in the polyester pellets after the contact treatment was high, and hence the quality of the polyester was poor.

Examples 1 to 10, in which the contact treatment was carried out with a contact treatment liquid containing a predetermined amount of cyclic dimers, or containing no cyclic dimers, according to the production method of the present invention enabled efficient reduction of the cyclic dimer content, so that deterioration of the quality such as a decrease in the IV could be suppressed.

INDUSTRIAL APPLICABILITY

In the production method of the present invention, the amount of cyclic dimers in the contact treatment liquid can be controlled to reduce the amount of cyclic oligomers in the polyester, so that a product can be obtained without lowering the productivity during molding.

DESCRIPTION OF SYMBOLS

1: Raw material supply line
2: Recycle line
3: Catalyst supply line
4: Esterification reaction product extraction line
5: Distillation line
6: Extraction line
7: Circulation line
8: Extraction line
9: Gas extraction line
10: Condensate line
11: Extraction line
12: Circulation line
13: Extraction line
14: Vent line
15: Supply line
A: Esterification reaction tank
B: Extraction pump
C: Rectifying column
D: Pump
E: Pump
F: Tank
G: Condenser
L1, L3, L5: Polycondensation reaction product extraction line
L2, L4, L6: Vent line
L7: Catalyst supply line
L8: Raw material supply line
a: First polycondensation reaction tank
d: Second polycondensation reaction tank
k: Third polycondensation reaction tank
c, e, m: Extraction gear pump
g: Die head
h: Rotary cutter
p, q, r, s: Filter
I: Circulation tank
II: Heat exchanger
III: Contact treatment tank
IV: Fine powder remover
V: Rotary valve
VI: Preliminary solid-liquid separator
VII: Recovery tank

VIII: Solid-liquid separator
IX: Pump
X: Pump
XI: Separator
101: Contact treatment liquid supply line
102: Extraction line
103: Pellet supply line
104: Extraction line
105: Supply line
106: Recovery line
108: Supply line
109: Extraction line
110: Extraction line
111: Supply line
112: Extraction line
113: Extraction line
I: First drying column
J: Cooling column
K: Second drying column
L: Condenser
M: Heat exchanger
N: Heat exchanger
O: Rotary valve
P: Rotary valve
Q: Rotary valve
R: Blower
S: Heat exchanger
201: Pellet supply line
202: Pellet extraction line
203: Pellet supply line
204: Pellet extraction line
205: Pellet supply line
206: Pellet extraction line
207: Drying gas recovery line
208: Drying gas supply line
209: Fresh drying gas supply line
210: Condensate extraction line
211: Cooling gas extraction line
212: Cooling gas supply line
213: Drying gas extraction line
214: Drying gas supply line

**Claims**

**1.** A method of producing a polyester, the method comprising:

an esterification reaction step of reacting a diol component containing 1,4-butanediol, with a dicarboxylic acid component;
a pelletization step of pelletizing a polyester obtained through the esterification reaction step; and
a contact treatment step of bringing a polyester pellet obtained in the pelletization step into contact with a contact treatment liquid,
wherein in the contact treatment step, the contact treatment liquid upon the contact with the polyester pellet has a cyclic dimer concentration of not more than 3500 ppm by mass.

**2.** The method of producing a polyester according to claim 1, wherein the temperature of the contact treatment liquid upon the contact between the polyester pellet and the contact treatment liquid is not less than 25°C and not more than the melting point of the polyester.

**3.** The method of producing a polyester according to claim 1, further comprising a separation step of separating at least part of cyclic dimers in the contact treatment liquid after the contact treatment step.

**4.** The method of producing a polyester according to claim 3, wherein the contact treatment liquid from which at least part of the cyclic dimers have been separated in the separation step is used as a contact treatment liquid in the contact treatment step.

**5.** The method of producing a polyester according to claim 1, wherein in the contact treatment step, the contact treatment liquid upon the contact between the polyester pellet and the contact treatment liquid contains water at 10% by mass to 99% by mass with respect to the total contact treatment liquid.

**6.** The method of producing a polyester according to claim 1, wherein in the contact treatment step, the contact treatment liquid upon the contact between the polyester pellet and the contact treatment liquid is a mixture of an alcohol and water.

**7.** The method of producing a polyester according to claim 1, wherein in the contact treatment step, the contact treatment liquid upon the contact with the polyester pellet has a cyclic dimer concentration of not less than 100 ppm by mass.

**8.** A method of producing a polyester, the method comprising:

an esterification reaction step of reacting a diol component containing 1,4-butanediol, with a dicarboxylic acid component;
a pelletization step of pelletizing a polyester obtained through the esterification reaction step;
a contact treatment step of bringing a polyester pellet obtained in the pelletization step into contact with a contact treatment liquid that is a mixture of an alcohol and water; and
a separation step of separating at least part of cyclic dimers in the contact treatment liquid after the contact treatment step,
wherein the contact treatment liquid from which at least part of the cyclic dimers have been separated in the separation step is used as a contact treatment liquid in the contact treatment step.

**9.** The method of producing a polyester according to claim 3 or 8, wherein the cyclic dimers separated in the separation step are supplied to the esterification reaction step.

**10.** The method of producing a polyester according to claim 1 or 8, wherein the resulting polyester has a cyclic dimer content of not more than 2000 ppm by mass.

**11.** The method of producing a polyester according to claim 3 or 8, wherein the separation step is a separation step of separating cyclic dimers using a separator.

**12.** A method of producing a polyester, the method comprising:

a contact treatment step of bringing a polyester pellet into contact with a contact treatment liquid that contains a mixture of an alcohol and water;
a separation step of separating at least part of cyclic dimers from the contact treatment liquid obtained in the contact treatment step; and
a polyester production step of bringing the contact treatment liquid obtained by separating the cyclic dimers in the separation step into contact with a polyester pellet, to obtain a polyester,
wherein the polyester obtained in the production step has a cyclic dimer content of not more than 2000 ppm by mass.

**13.** Use of a polyester for the production of a food contact film, the polyester containing:

a repeating structural unit derived from a diol containing 1,4-butanediol; and
a repeating structural unit derived from a dicarboxylic acid;

the polyester having a cyclic dimer content of not more than 2000 ppm by mass.

**14.** A food contact film comprising a polyester composition that contains a polyester containing:

a repeating structural unit derived from a diol containing 1,4-butanediol; and
a repeating structural unit derived from a dicarboxylic acid,

the polyester having a cyclic dimer content of not more than 2000 ppm by mass.

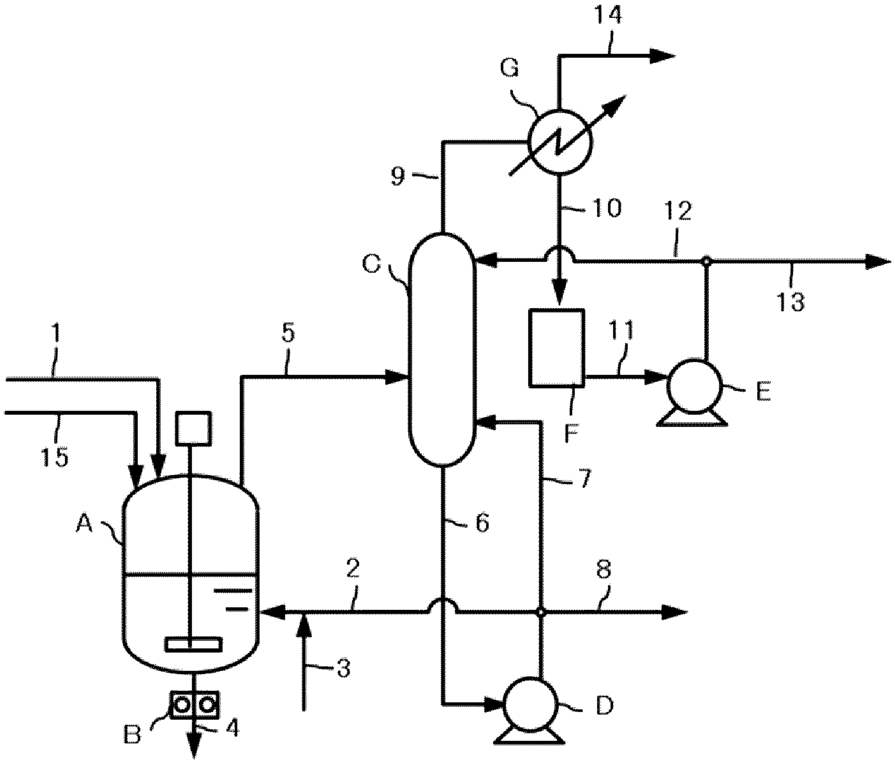


FIG. 1

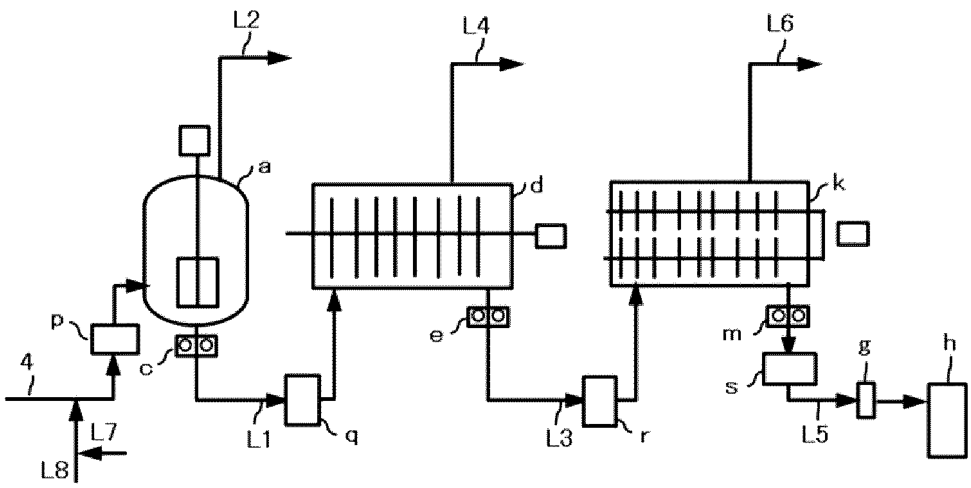


FIG. 2

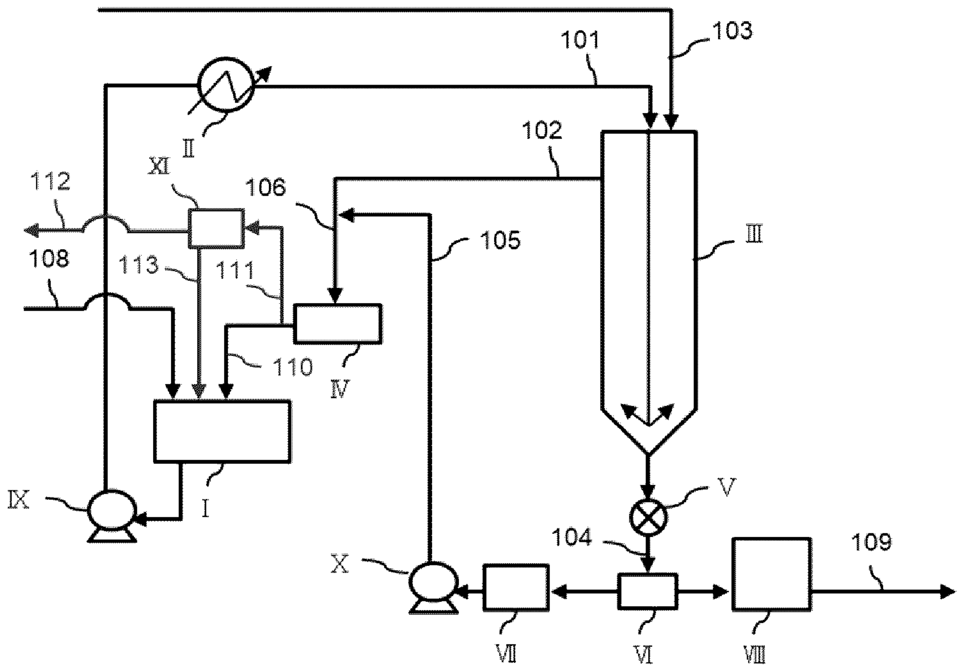
101
103
II
102
XI
112
106
III
105
108
113
111
110
IV
IX
I
V
104
109
X
VII
VI
VIII

FIG. 3

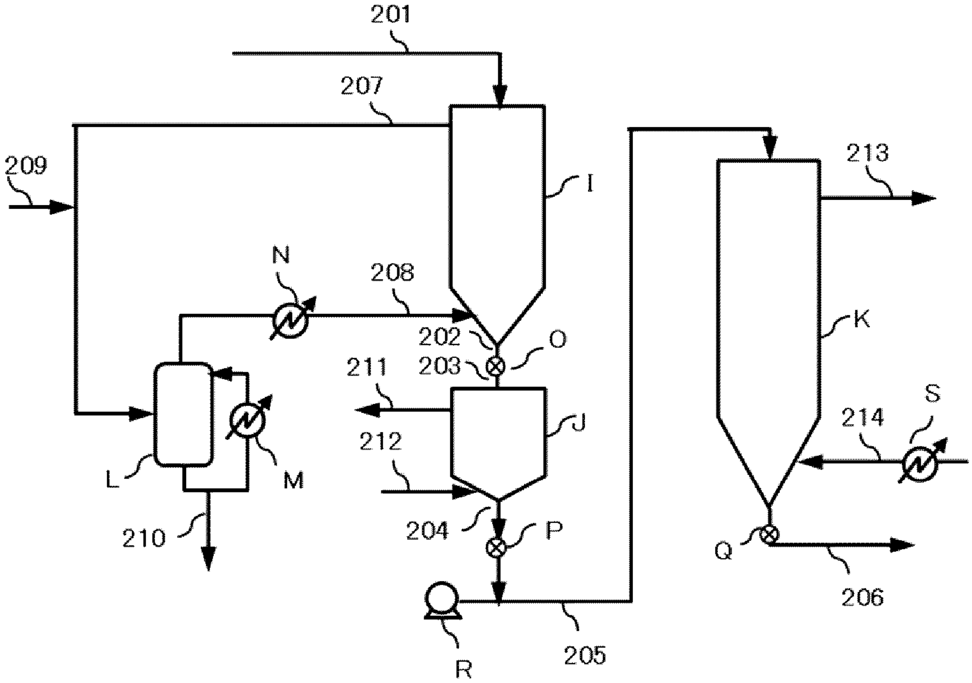
201
207
209
I
213
N
208
K
202
O
203
211
J
S
214
212
L
M
210
204
P
Q
206
R
205

FIG. 4

**INTERNATIONAL SEARCH REPORT**

International application No.
**PCT/JP2023/035569**

**A. CLASSIFICATION OF SUBJECT MATTER**

***C08G 63/88***(2006.01)i; ***C08G 63/16***(2006.01)i; ***C08L 101/16***(2006.01)i
FI: C08G63/88; C08G63/16; C08L101/16

According to International Patent Classification (IPC) or to both national classification and IPC

**B. FIELDS SEARCHED**

Minimum documentation searched (classification system followed by classification symbols)

C08G63/88; C08G63/16; C08L101/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-92310 A (MITSUBISHI CHEMICALS CORP) 17 May 2012 (2012-05-17) claims, paragraphs [0002]-[0003], [0007], [0056]-[0065], [0077]-[0078], [0082]-[0119] | 1-14 |
| X | JP 2005-325259 A (MITSUBISHI CHEMICALS CORP) 24 November 2005 (2005-11-24) claims, paragraphs [0002], [0006], [0025]-[0046] | 1-8, 10-14 |
| X | JP 2018-145221 A (MITSUBISHI CHEM CORP) 20 September 2018 (2018-09-20) claims, paragraphs [0002], [0005], [0008], [0071]-[0082], [0115]-[0120], [0125]-[0151] | 1-14 |
| X | JP 9-263629 A (SHIMADZU CORP) 07 October 1997 (1997-10-07) claims, paragraphs [0004]-[0005], [0012]-[0013], [0025]-[0026] | 1-14 |
| A | WO 2019/096918 A1 (BASF SE) 23 May 2019 (2019-05-23) entire text | 1-14 |

☐ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 November 2023** | **19 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**
**Information on patent family members**

International application No.
**PCT/JP2023/035569**

| Patent document cited in search report | Publication date (day/month/year) | Patent family member(s) | Publication date (day/month/year) |
|---|---|---|---|
| JP 2012-92310 A | 17 May 2012 | US 2013/0211037 A1<br>claims, paragraphs [0002]-[0003], [0009], [0081]-[0092], [0108]-[0109], [0115]-[0155]<br>EP 2623540 A1<br>CN 103124761 A<br>WO 2012/043488 A1 | |
| JP 2005-325259 A | 24 November 2005 | (Family: none) | |
| JP 2018-145221 A | 20 September 2018 | (Family: none) | |
| JP 9-263629 A | 07 October 1997 | (Family: none) | |
| WO 2019/096918 A1 | 23 May 2019 | US 2020/0362101 A1<br>EP 3713987 A1<br>CN 111372971 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005324259 A
- JP H7316276 A
- JP 2004107457 A
- JP 2010195989 A
- JP 2012092310 A